# EUROPEAN PATENT APPLICATION

(11) **EP 4 749 946 A1**
(43) Date of publication of application: **27.05.2026**
(21) Application number: 24853373.9
(22) Date of filing: 21.06.2024
(51) Int. Cl.: H04B 7/06

(54) **CHANNEL STATE INFORMATION REPORTING METHOD, TERMINAL DEVICE, BASE STATION, AND MEDIUM**

(30) Priority: 11.08.2023 CN 202311017074
(71) Applicant: ZTE Corporation, Shenzhen, Guangdong 518057 (CN)
(72) Inventor: MA, Xiaoying, Shenzhen, Guangdong 518057 (CN); CHEN, Mengzhu, Shenzhen, Guangdong 518057 (CN); DAI, Bo, Shenzhen, Guangdong 518057 (CN); XU, Jun, Shenzhen, Guangdong 518057 (CN); MA, Xuan, Shenzhen, Guangdong 518057 (CN); HU, Youjun, Shenzhen, Guangdong 518057 (CN)
(74) Representative: Aipex B.V.
(86) International application number: PCT/CN2024/100668
(87) International publication number: WO 2025/035958

(57) **Abstract**

Provided are a CSI reporting method, a UE, a base station, and a medium. The CSI reporting method includes: sending a UE capability signaling, where the UE capability signaling is used to indicate a UE capability for CSI reporting supported by the UE; receiving a high-layer configuration signaling, where the high-layer configuration signaling includes CSI report configuration information, the CSI report configuration information includes L sub-configurations, L is an integer greater than or equal to 1, and the CSI report configuration information is configured based on the UE capability; and reporting CSI information according to the high-layer configuration signaling.

## Description

### TECHNICAL FIELD

The present disclosure relates to the technical field of communication, for example, to a channel state information (CSI) reporting method, user equipment (UE), a base station, and a medium.

### BACKGROUND

With the widespread application of large bandwidths and massive multiple-input multiple-output (MIMO) antennas in fifth generation (5G) communication systems, energy consumption of a base station increases significantly.

One effective approach for saving energy consumption of a base station is antenna shutdown. After an antenna is shut down, associated components (for example, a power amplifier) may also be shut down, thereby reducing energy consumption. However, switching an antenna on or off changes a channel between the base station and a UE. If the channel state is not updated in a timely manner, data scheduling may be affected. Therefore, reporting multiple sets of CSI information in one CSI report, where each set of CSI information corresponds to an antenna shutdown mode, can help the base station obtain channel state information under different antenna shutdown modes, thereby improving data scheduling. Another approach for saving energy consumption of a base station is power adjustment. Reporting multiple sets of CSI information in one CSI report, where each set of CSI information corresponds to a power adjustment mode, can help the base station perform data scheduling more effectively.

In the approaches described above, the UE needs to support reporting multiple sets of CSI information, which requires the UE to perform measurements and calculations for multiple sets of CSI information and thus imposes relatively high requirements on UE capability. Some UEs may not be able to support reporting multiple sets of CSI information. If a UE cannot support such reporting, the base station cannot configure corresponding CSI report configurations for the UE. Therefore, how to enable a UE to report (or have) an appropriate UE capability is a crucial issue.

### SUMMARY

The present disclosure provides a CSI reporting method, a UE, a base station, and a medium.

The embodiments of the present disclosure provide a CSI reporting method applied to a UE, and the CSI reporting method includes the following operations:

A UE capability signaling is sent. The UE capability signaling is used to indicate a UE capability for CSI reporting supported by the UE.

A high-layer configuration signaling is received. The high-layer configuration signaling includes CSI report configuration information, the CSI report configuration information includes L sub-configurations, L is an integer greater than or equal to 1, and the CSI report configuration information is configured based on the UE capability.

CSI information is reported according to the high-layer configuration signaling.

The embodiments of the present disclosure further provide a CSI reporting method applied to a base station, and the CSI reporting method includes the following operations:

A UE capability signaling is received. The UE capability signaling is used to indicate a UE capability for CSI reporting supported by a UE.

CSI report configuration information included in a high-layer configuration signaling is configured according to the UE capability. The CSI report configuration information includes L sub-configurations, and L is an integer greater than or equal to 1.

The high-layer configuration signaling is sent to the UE to enable the UE to report CSI information according to the high-layer configuration signaling.

The embodiments of the present disclosure further provide a UE, and the UE includes a memory, a processor, and a computer program stored in the memory and executable by the processor, where the processor, when executing the computer program, is configured to implement the CSI reporting method described above.

The embodiments of the present disclosure further provide a base station, and the base station includes a memory, a processor, and a computer program stored in the memory and executable by the processor, where the processor, when executing the computer program, is configured to implement the CSI reporting method described above.

The embodiments of the present disclosure further provide a storage medium, and the computer-readable storage medium stores a computer program, where the computer program, when executed by a processor, is configured to implement the CSI reporting method described above.

With regard to the above embodiments and other aspects of the present disclosure and implementations thereof, more description is provided in the brief description of drawings, the detailed description, and the claims.

### BRIEF DESCRIPTION OF DRAWINGS

FIG. 1A is a schematic diagram of a configuration manner according to an embodiment of the present disclosure.
FIG. 1B is another schematic diagram of a configuration manner according to an embodiment of the present disclosure.
FIG. 2 is a flowchart of a CSI reporting method according to an embodiment of the present disclosure.
FIG. 3 is a schematic diagram of a CSI report according to an embodiment of the present disclosure.
FIG. 4A is a schematic diagram of a first priority order of each part of CSI information in a CSI report according to an embodiment of the present disclosure.
FIG. 4B is a schematic diagram of a discard order of each part of CSI information in a CSI report according to an embodiment of the present disclosure.
FIG. 5 is a schematic diagram of a second priority order of each part of CSI information in a CSI report according to an embodiment of the present disclosure.
FIG. 6 is a schematic diagram of a third priority order of each part of CSI information in a CSI report according to an embodiment of the present disclosure.
FIG. 7A is a schematic diagram of a fourth priority order of each part of CSI information in a CSI report according to an embodiment of the present disclosure.
FIG. 7B is another schematic diagram of a discard order of each part of CSI information in a CSI report according to an embodiment of the present disclosure.
FIG. 8 is a schematic diagram of a fifth priority order of each part of CSI information in a CSI report according to an embodiment of the present disclosure.
FIG. 9 is a schematic diagram of a sixth priority order of each part of CSI information in a CSI report according to an embodiment of the present disclosure.
FIG. 10 is another flowchart of a CSI reporting method according to an embodiment of the present disclosure.
FIG. 11 is a schematic structural diagram of a CSI reporting apparatus according to an embodiment of the present disclosure.
FIG. 12 is another schematic structural diagram of a CSI reporting apparatus according to an embodiment of the present disclosure.
FIG. 13 is a schematic diagram of a hardware structure of a UE according to an embodiment of the present disclosure.
FIG. 14 is a schematic diagram of a hardware structure of a base station according to an embodiment of the present disclosure.

### DETAILED DESCRIPTION

To make the objectives, technical solutions, and advantages of the present disclosure clearer and more comprehensible, embodiments of the present disclosure are described in more detail hereinafter with reference to the drawings. It should be noted that the embodiments in the present disclosure and the features in the embodiments may be arbitrarily combined with each other without conflict.

The steps illustrated in the flowchart of the drawings may be performed in a computer system such as a set of computer-executable instructions. Moreover, although a logical order is illustrated in the flowchart, in some cases, the steps illustrated or described may be performed in a different order than illustrated herein.

At one CSI reporting occasion, a UE reports multiple sets of CSI information in one CSI report. The CSI report includes multiple sets of CSI information, and each set of CSI information is associated with one sub-configuration. One CSI-ReportConfig corresponds to one CSI report configuration, and the CSI-ReportConfig includes L sub-configurations, where L is an integer greater than or equal to 1.

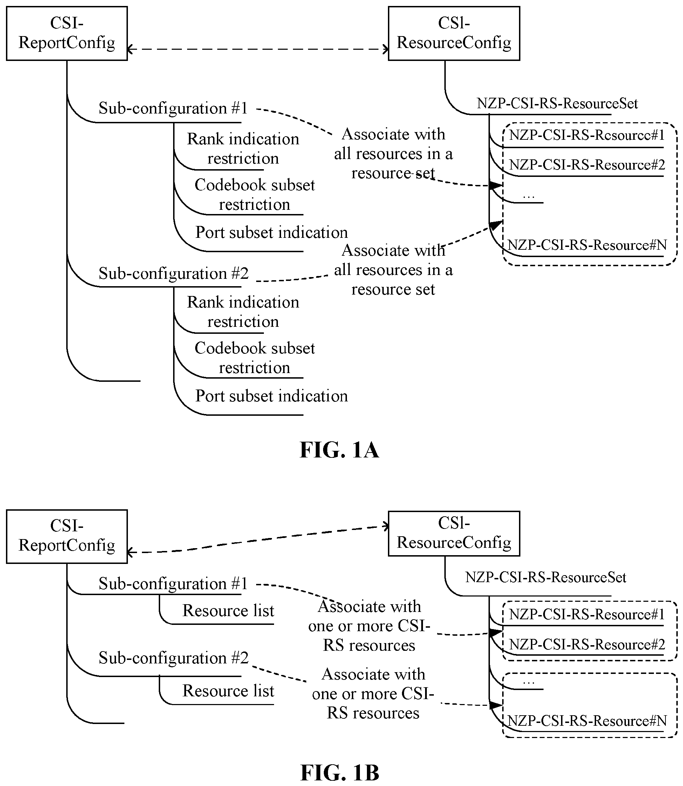

Configuration manner 1 is shown in FIG. 1A. As shown in FIG. 1A, one sub-configuration is configured with at least a rank indication restriction, a codebook subset restriction, and a port subset indication. Each sub-configuration is associated with all channel state information reference signal (CSI-RS) resources in a resource set. The CSI-RS resource set is a resource set in a resource setting associated with the CSI-ReportConfig. Configuration manner 1 is a configuration manner for reporting multiple sets of CSI information for spatial-domain adjustment at a base station, and different sub-configurations may be associated with different numbers of ports. The port subset indication indicates one or more CSI-RS ports.

Configuration manner 2 is shown in FIG. 1B. As shown in FIG. 1B, one sub-configuration is configured with at least a resource list. One resource list includes one or more CSI-RS resource identifiers, and one sub-configuration is associated with one or more CSI-RS resources. Configuration manner 2 is a configuration manner for reporting multiple sets of CSI information for spatial-domain adjustment at the base station. CSI-RS resources in different sub-configurations have a same port-number configuration, and different sub-configurations are associated with different CSI-RS resources.

In configuration manner 3, one sub-configuration is configured with at least one of the following: one or more power offsets, one or more power deviation values, or one or more power offset indices. Configuration manner 3 is a configuration manner for reporting multiple sets of CSI information for power adjustment at a base station, and different sub-configurations correspond to different power offsets. The power offset includes an assumed ratio between an energy per resource element (EPRE) of a physical downlink shared channel (PDSCH) and a non-zero power (NZP) CSI-RS EPRE when the UE acquires CSI feedback, and/or an assumed ratio between the NZP CSI-RS EPRE and an EPRE of a synchronization signal/physical broadcast channel block (SS/PBCH).

With these configuration manners, the UE needs to support reporting multiple sets of CSI information. Reporting multiple sets of CSI information requires the UE to perform measurements and calculations for multiple sets of CSI information, which imposes relatively high requirements on UE capability. If the UE does not have the capability to support reporting multiple sets of CSI information, the base station cannot configure corresponding CSI report configurations for the UE. Therefore, how to obtain (or enable the UE to report) an appropriate UE capability is a technical issue to be addressed. In addition, the above three configuration manners are configured independently, and how to support a joint configuration is also a technical issue to be addressed.

In some embodiments, each sub-configuration represents an antenna shutdown mode. In some embodiments, each sub-configuration represents a power adjustment mode.

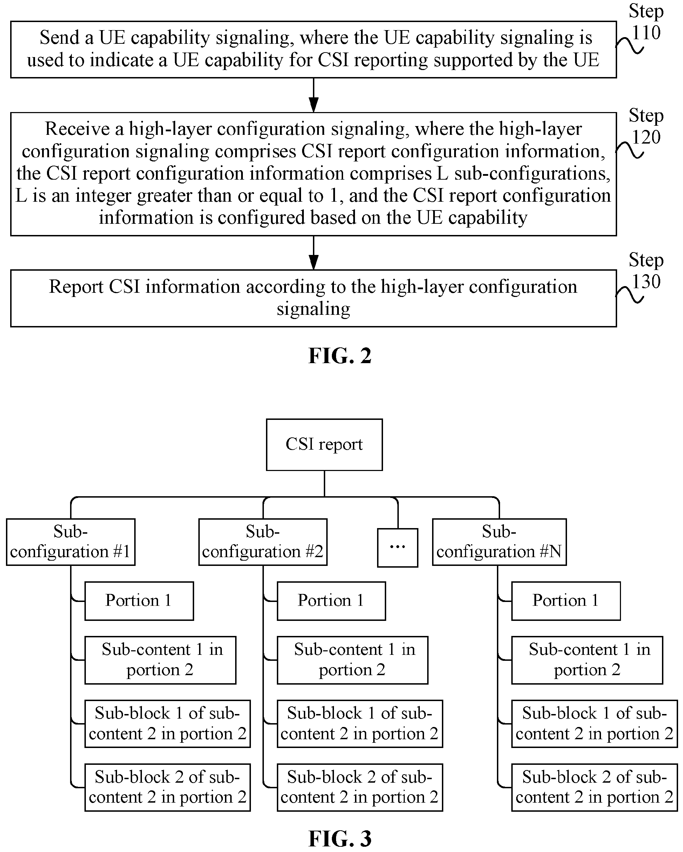

To solve the above technical problem, FIG. 2 is a flowchart of a CSI reporting method according to an embodiment of the present disclosure. As shown in FIG. 2, the CSI reporting method is applied to a UE and includes steps 110 to 130.

In step 110, a UE capability signaling is sent, where the UE capability signaling is used to indicate a UE capability for CSI reporting supported by the UE.

In the present embodiment, the UE sends the UE capability signaling to a base station to inform the base station of the UE capability for CSI reporting supported by the UE.

The UE capability may include one of or a combination of multiple the following:
whether the UE supports configuring L sub-configurations in one CSI report configuration, where the L sub-configurations are configured with parameters of multiple types;
whether the UE supports reporting N sets of CSI information in one CSI report;
a maximum value of L supported by the UE, where candidate values of the maximum value of L include at least one of {2, 3, 4};
whether the UE supports overhead-saving reporting of multiple sets of CSI information;
whether the UE supports CSI processing unit (CPU: CSI processing unit) computation for reporting multiple sets of CSI information;
whether the UE supports CPU computation for overhead-saving reporting of multiple sets of CSI information;
CSI types supported by the UE for reporting multiple sets of CSI information, where the CSI types include at least one of: first-type CSI, second-type CSI, sub-block 1 of third-type CSI, or sub-block 2 of third-type CSI;
a priority type supported by the UE;
a scaling factor supported by the UE for overhead-saving CPU computation;
a minimum value of the scaling factor supported by the UE for overhead-saving CPU computation;
a scaling factor supported by the UE for overhead saving;
a minimum value of the scaling factor supported by the UE for overhead saving;
a value range of the scaling factor, where the value of the scaling factor is a positive number, and is greater than or equal to 1 and less than or equal to a maximum number of configurable resources in a resource set;
whether the UE supports configuring parameters of multiple types in one sub-configuration of one CSI report configuration;
whether the UE supports configuring parameters of different types in different sub-configurations of one CSI report configuration; and
whether the UE supports triggering N sub-configurations among L sub-configurations through downlink control information (DCI) or a medium access control (MAC) control element (CE).

In step 120, a high-layer configuration signaling is received, where the high-layer configuration signaling includes CSI report configuration information, the CSI report configuration information includes L sub-configurations, L is an integer greater than or equal to 1, and the CSI report configuration information is configured based on the UE capability.

One CSI report may include at least one of the following: a CSI-RS resource indicator (CRI), a rank indicator (RI), a layer indicator (LI), a precoding matrix indicator (PMI), or a channel quality indicator (CQI).

In the present embodiment, the high-layer configuration signaling sent by the base station is received by the UE, and the CSI report is reported by the UE to the base station according to the CSI report configuration information. When the base station configures and schedules the UE, UE radio access capability parameters indicated in the UE capability signaling and reported by the UE are taken into account.

The CSI report configuration information includes L sub-configurations, each set of CSI information is associated with one sub-configuration, and each sub-configuration is a CSI report sub-configuration.

In step 130, CSI information is reported according to the high-layer configuration signaling.

In the present embodiment, CSI information is reported by the UE according to the L sub-configurations included in the high-layer configuration signaling, and the CSI report is reported to the base station. The CSI report may include multiple sets of CSI information, where one set of CSI information is associated with one sub-configuration. Content of each set of CSI information is measured according to a corresponding sub-configuration.

In the present embodiment, a relatively high UE capability is defined, which enables the UE to support reporting multiple sets of CSI information and thus can effectively reduce energy consumption of the base station. In addition, the UE capability supports a joint configuration, enabling the base station to implement both spatial-domain adjustment and power adjustment.

In an embodiment, the UE capability includes one or more of a first UE capability, a second UE capability, a third UE capability, a fourth UE capability, and a fifth UE capability.

The first UE capability is used to indicate whether the UE supports configuring the L sub-configurations in one CSI report configuration. The L sub-configurations are configured with a first-type parameter or a third-type parameter. The first-type parameter includes a rank indication restriction, a codebook subset restriction, and a port subset indication. The third-type parameter includes a resource list.

The second UE capability is used to indicate whether the UE supports configuring the L sub-configurations in one CSI report configuration. The L sub-configurations are configured with a second-type parameter, and the second-type parameter includes one of the following: one or more power offsets, one or more power deviation values, or one or more power offset indices.

The third UE capability is used to indicate whether the UE supports configuring parameters of multiple types in one sub-configuration of one CSI report configuration.

The fourth UE capability is used to indicate whether the UE supports configuring parameters of different types in different sub-configurations of one CSI report configuration.

The fifth UE capability is used to indicate whether the UE supports triggering N sub-configurations among the L sub-configurations through DCI or a MAC CE, where N is an integer greater than or equal to 1 and less than or equal to L.

The UE capability may include one or more of the first UE capability, the second UE capability, the third UE capability, the fourth UE capability, and the fifth UE capability.

In the present embodiment, the first UE capability may be used to indicate whether the UE supports configuring the L sub-configurations in one CSI report configuration, where the L sub-configurations are each configured with the rank indication restriction, the codebook subset restriction, and the port subset indication, and specific values of the rank indication restriction, the codebook subset restriction, and the port subset indication configured in different sub-configurations among the L sub-configurations may be different. Alternatively, the first UE capability may be used to indicate whether the UE supports configuring the L sub-configurations in one CSI report configuration, where the L sub-configurations are each configured with a resource list, and contents of resource lists configured in different sub-configurations among the L sub-configurations may be different.

In the present embodiment, the second UE capability may be used to indicate whether the UE supports configuring the L sub-configurations in one CSI report configuration, where the L sub-configurations are configured with one or more power offsets, one or more power deviation values, or one or more power offset indices, and specific values configured in different sub-configurations among the L sub-configurations may be different.

In the present embodiment, the third UE capability may be used to indicate whether the UE supports configuring parameters of any one type, any two types, or three types among the first-type parameter, the second-type parameter, and the third-type parameter in one sub-configuration of one CSI report configuration. Parameters of two types may include the first-type parameter and the second-type parameter, or may include the second-type parameter and the third-type parameter.

In the present embodiment, the fourth UE capability may be used to indicate whether the UE supports configuring parameters of different types in different sub-configurations of one CSI report configuration. For example, the fourth UE capability may be used to indicate whether the UE supports configuring the first-type parameter in sub-configuration 1, configuring the third-type parameter in sub-configuration 2, ..., configuring the third-type parameter and the second-type parameter in sub-configuration N, and configuring the first-type parameter and the second-type parameter in sub-configuration L in one CSI report configuration.

In the present embodiment, the fifth UE capability includes one or more of the following:
whether the UE reports support for triggering N sub-configurations among the L sub-configurations through DCI or a MAC CE;
whether the UE reports support for triggering N sub-configurations among the L sub-configurations through DCI;
whether the UE reports support for triggering N sub-configurations among the L sub-configurations in a semi-persistent scheduling (SPS) CSI report configuration through a MAC CE;
whether the UE reports support for triggering N sub-configurations among the L sub-configurations in an aperiodic CSI report configuration through DCI;
whether the UE reports support for triggering N sub-configurations among the L sub-configurations in an SPS CSI report configuration through DCI or a MAC CE;
whether the UE reports support for triggering N sub-configurations among the L sub-configurations in an SPS CSI report configuration through DCI; or
whether the UE reports support for triggering N sub-configurations among the L sub-configurations in a periodic CSI report configuration through DCI or a MAC CE.

In an embodiment, in response to the UE reporting support for the first UE capability and the second UE capability, or in response to the UE reporting support for the third UE capability, the L sub-configurations satisfy one of the following:

Each sub-configuration among the L sub-configurations is only configured with the first-type parameter.

Each sub-configuration among the L sub-configurations is only configured with the second-type parameter.

Each sub-configuration among the L sub-configurations is only configured with the third-type parameter.

Each sub-configuration among the L sub-configurations is only configured with parameters of one type, where the parameters of one type include the first-type parameter, the second-type parameter, or the third-type parameter, and different sub-configurations are configured with parameters of different types.

Each sub-configuration among the L sub-configurations is configured with parameters of one type or parameters of two types, where the parameters of two types include the first-type parameter and the second-type parameter, or include the second-type parameter and the third-type parameter.

In the present embodiment, in response to the UE reporting support for the first UE capability and the second UE capability, or in response to the UE reporting support for the third UE capability, each sub-configuration among the L sub-configurations in one CSI report configuration may be only configured with the first-type parameter, where the first-type parameter includes the rank indication restriction, the codebook subset restriction, and the port subset indication.

In the present embodiment, in response to the UE reporting support for the first UE capability and the second UE capability, or in response to the UE reporting support for the third UE capability, each sub-configuration among the L sub-configurations in one CSI report configuration may be only configured with the second-type parameter, where the second-type parameter includes one of the following: one or more power offsets, one or more power deviation values, or one or more power offset indices.

In the present embodiment, in response to the UE reporting support for the first UE capability and the second UE capability, or in response to the UE reporting support for the third UE capability, each sub-configuration among the L sub-configurations in one CSI report configuration may be only configured with the third-type parameter, where the third-type parameter includes a resource list.

In the present embodiment, in response to the UE reporting support for the first UE capability and the second UE capability, or in response to the UE reporting support for the third UE capability, each sub-configuration among the L sub-configurations in one CSI report configuration may be only configured with one of the first-type parameter, the second-type parameter, and the third-type parameter, and different sub-configurations may be configured with parameters of different types.

In the present embodiment, in response to the UE reporting support for the first UE capability and the second UE capability, or in response to the UE reporting support for the third UE capability, each sub-configuration among the L sub-configurations in one CSI report configuration is configured with parameters of one type or parameters of two types. For example, a sub-configuration among the L sub-configurations is configured with the rank indication restriction, the codebook subset restriction, the port subset indication, and one of the following: one or more power offsets, one or more power deviation values, or one or more power offset indices. Another sub-configuration among the L sub-configurations is configured with a resource list and one of the following: one or more power offsets, one or more power deviation values, or one or more power offset indices. Another sub-configuration among the L sub-configurations is configured with a resource list.

In an embodiment, in response to the UE reporting support for the first UE capability, the second UE capability, and the fourth UE capability, one sub-configuration among the L sub-configurations satisfies one of the following:

The one sub-configuration is configured with the rank indication restriction, the codebook subset restriction, and the port subset indication.

The one sub-configuration is configured with a resource list.

The one sub-configuration is configured with the first-type parameter and the second-type parameter.

The one sub-configuration is configured with the second-type parameter and the third-type parameter.

The one sub-configuration is configured with the second-type parameter.

In the present embodiment, in response to the UE reporting support for the first UE capability, the second UE capability, and the fourth UE capability, one sub-configuration among the L sub-configurations is configured with the rank indication restriction, the codebook subset restriction, and the port subset indication.

In the present embodiment, in response to the UE reporting support for the first UE capability, the second UE capability, and the fourth UE capability, one sub-configuration among the L sub-configurations is configured with a resource list.

In the present embodiment, in response to the UE reporting support for the first UE capability, the second UE capability, and the fourth UE capability, one sub-configuration among the L sub-configurations is configured with the rank indication restriction, the codebook subset restriction, and the port subset indication, and with one of the following: one or more power offsets, one or more power deviation values, or one or more power offset indices.

In the present embodiment, in response to the UE reporting support for the first UE capability, the second UE capability, and the fourth UE capability, one sub-configuration among the L sub-configurations is configured with a resource list, and with one of the following: one or more power offsets, one or more power deviation values, or one or more power offset indices.

In the present embodiment, in response to the UE reporting support for the first UE capability, the second UE capability, and the fourth UE capability, the L sub-configurations may include: one or more sub-configurations configured with the rank indication restriction, the codebook subset restriction, and the port subset indication; and one or more sub-configurations configured with the rank indication restriction, the codebook subset restriction, and the port subset indication, and with one of the following: one or more power offsets, one or more power deviation values, or one or more power offset indices.

In the present embodiment, in response to the UE reporting support for the first UE capability, the second UE capability, and the fourth UE capability, the L sub-configurations may include: one or more sub-configurations configured with the rank indication restriction, the codebook subset restriction, and the port subset indication; one or more sub-configurations configured with the rank indication restriction, the codebook subset restriction, and the port subset indication, and with one of the following: one or more power offsets, one or more power deviation values, or one or more power offset indices; and one or more sub-configurations configured with one of the following: one or more power offsets, one or more power deviation values, or one or more power offset indices.

In the present embodiment, in response to the UE reporting support for the first UE capability, the second UE capability, and the fourth UE capability, the L sub-configurations may include: one or more sub-configurations configured with a resource list; and one or more sub-configurations configured with a resource list and with one of the following: one or more power offsets, one or more power deviation values, or one or more power offset indices.

In the present embodiment, in response to the UE reporting support for the first UE capability, the second UE capability, and the fourth UE capability, the L sub-configurations may include: one or more sub-configurations configured with a resource list; one or more sub-configurations configured with a resource list and with one of the following: one or more power offsets, one or more power deviation values, or one or more power offset indices; and one or more sub-configurations configured with one of the following: one or more power offsets, one or more power deviation values, or one or more power offset indices.

In one embodiment, in response to the UE reporting non-support for the third UE capability or reporting non-support for the fourth UE capability, or in response to the UE not reporting the third UE capability or not reporting the fourth UE capability, all sub-configurations in the L sub-configurations are configured with parameters of a same type.

In the present embodiment, in response to the UE reporting non-support for the third UE capability or reporting non-support for the fourth UE capability, or in response to the UE not reporting the third UE capability or not reporting the fourth UE capability, all sub-configurations in the L sub-configurations are configured with parameters of a same type, and the parameters of a same type includes any combination of the first-type parameter, the second-type parameter, or the third-type parameter.

In the present embodiment, in response to the UE reporting non-support for the third UE capability or reporting non-support for the fourth UE capability, or in response to the UE not reporting the third UE capability or not reporting the fourth UE capability, all sub-configurations in the L sub-configurations are configured with parameters of a same type, and the parameters of the same type may include one of the first-type parameter, the second-type parameter, or the third-type parameter.

In one embodiment, in response to the UE supporting, for CSI resporting, at least one of the third UE capability, the fourth UE capability, or the fifth UE capability, and N sub-configurations among the L sub-configurations being triggered through DCI or a MAC CE, the N sub-configurations satisfy one of the following:

The N sub-configurations are configured with parameters of a same type.

In response to the N sub-configurations being configured with parameters of different types, the N sub-configurations do not include both a sub-configuration configured with the rank indication restriction, the codebook subset restriction, and the port subset indication and a sub-configuration configured with a resource list.

In the present embodiment, in response to the N sub-configurations being configured with parameters of different types, the N sub-configurations do not comprise both a sub-configuration configured with the first-type parameter and a sub-configuration configured with the third-type parameter.

In one embodiment, reporting the CSI information includes discarding a part of CSI in a CSI report according to sub-configuration information and CSI type information.

In the present embodiment, discarding a part of CSI in the CSI report according to the sub-configuration information and the CSI type information includes determining a priority of the CSI type in the sub-configuration according to the sub-configuration information and the CSI type information, and discarding according to the priority. Each set of the N sets of CSI information may be divided into multiple portions, which may be referred to as a portion 1, a sub-content 1 in portion 2, a sub-block 1 of sub-content 2 in portion 2, and a sub-block 2 of sub-content 2 in portion 2.

In some embodiments, not all the CSI in the CSI report is reported to the base station when the CSI information is reported by the UE. For example, when the resource carrying the CSI is insufficient to carry all the CSI, part of the CSI needs to be discarded according to priority information, and the remaining CSI is reported to the base station. The priority information may include a priority of the L sub-configurations and the priority of the CSI type. The priority information may also be a priority determined based on the priority of the L sub-configurations and the priority of the CSI type. A sub-configuration with low priority and CSI with low priority are discarded first. Discarding is stopped when the remaining CSI satisfies a resource requirement.

The priority of the L sub-configurations may be configured by the high-layer signaling. The priority of the L sub-configurations may be predefined. Moreover, the priority of the L sub-configurations may also be determined according to a sub-configuration index. The high-layer signaling is configured with priority information of the L sub-configurations, with each sub-configuration corresponding to a respective priority. The priority of the L sub-configurations is predefined. Moreover, the priority of the L sub-configurations is indicated by the sub-configuration index. The larger the sub-configuration index, the lower the priority of the sub-configuration.

In some embodiments, the priority is indicated by a numerical value, and the larger the numerical value, the lower the priority.

In one embodiment, the CSI includes N sets of CSI information. The N sets of CSI information are associated with N sub-configurations. N is an integer greater than or equal to 1 and less than or equal to L. Each set of CSI information is divided into three portions: a first-type CSI, a second-type CSI, and a third-type CSI.

The third-type CSI is divided into a first sub-block (i.e., sub-block 1) of the third-type CSI and a second sub-block (i.e., sub-block 2) of the third-type CSI according to odd-numbered sub-bands and even-numbered sub-bands, respectively.

In the present embodiment, when one set of CSI information corresponds to one sub-configuration, the set of CSI information is divided into multiple portions: portion 1 (i.e., the first-type CSI), sub-content 1 of portion 2 (i.e., the second-type CSI), and sub-content 2 of portion 2 (i.e., the third-type CSI). Sub-content 2 of portion 2 is further divided into a first sub-block (i.e., the first sub-block of the third-type CSI) and a second sub-block (i.e., the second sub-block of the third-type CSI) according to odd-numbered sub-bands and even-numbered sub-bands, respectively.

In the present embodiment, when one set of CSI information corresponds to one sub-configuration, each set of CSI information is divided into multiple portions, including: portion 1, sub-content 1 of portion 2, sub-block 1 of sub-content 2 of portion 2, and sub-block 2 of sub-content 2 of portion 2. As shown in FIG. 3, FIG. 3 is a schematic diagram of a CSI report according to an embodiment of the present disclosure. Sub-configuration #1 corresponds to one set of CSI information, sub-configuration #2 corresponds to one set of CSI information, ..., and sub-configuration #N corresponds to one set of CSI information. The CSI information corresponding to each of sub-configuration #1 to sub-configuration #N includes portion 1, sub-content 1 of portion 2, sub-block 1 of sub-content 2 of portion 2, and sub-block 2 of sub-content 2 of portion 2. Here, #1, #2, and #N indicate a sub-configuration index or a priority value of a sub-configuration.

Portion 1 (i.e., the first-type CSI) includes CRI, RI, a wideband CQI of transmission block 1, and a sub-band differential CQI of transmission block 1. One or more items among CRI, RI, the wideband CQI of transmission block 1, and the sub-band differential CQI of transmission block 1 may not be reported. For example, when a CSI report is configured to report only the wideband CQI, the sub-band differential CQI of transmission block 1 is not reported. Therefore, when one or more of CRI, RI, the wideband CQI of transmission block 1, and the sub-band differential CQI of transmission block 1 are reported, such reported information belongs to the first-type CSI.

Sub-content 1 of portion 2 (i.e., the second-type CSI) includes a wideband CQI of transmission block 2, a layer indication, and a wideband PMI. One or more items among the wideband CQI of transmission block 2, the layer indication, and the wideband PMI may not be reported. For example, when a rank in a CSI report is less than or equal to 4, the wideband CQI of transmission block 2 is not reported. Therefore, when one or more of the wideband CQI of transmission block 2, the layer indication, and the wideband PMI are reported, such reported information belongs to the second-type CSI.

Sub-block 1 of sub-content 2 of portion 2 (i.e., sub-block 1 of the third-type CSI) includes a sub-band differential CQI of even-numbered sub-bands of transmission block 2 and a sub-band PMI of even-numbered sub-bands. One or more items among the sub-band differential CQI of even-numbered sub-bands of transmission block 2 and the sub-band PMI of even-numbered sub-bands may not be reported. For example, when a rank in a CSI report is less than or equal to 4, the sub-band differential CQI of even-numbered sub-bands of transmission block 2 is not reported. Therefore, when one or more of the sub-band differential CQI of even-numbered sub-bands of transmission block 2 and the sub-band PMI of even-numbered sub-bands are reported, such reported information belongs to sub-block 1 of the third-type CSI.

Sub-block 2 of sub-content 2 of portion 2 (i.e., sub-block 2 of the third-type CSI) includes a sub-band differential CQI of odd-numbered sub-bands of transmission block 2 and a sub-band PMI of odd-numbered sub-bands. One or more items among the sub-band differential CQI of odd-numbered sub-bands of transmission block 2 and the sub-band PMI of odd-numbered sub-bands may not be reported. For example, when a rank in a CSI report is less than or equal to 4, the sub-band differential CQI of odd-numbered sub-bands of transmission block 2 is not reported. Therefore, when one or more of the sub-band differential CQI of odd-numbered sub-bands of transmission block 2 and the sub-band PMI of odd-numbered sub-bands are reported, such reported information belongs to sub-block 2 of the third-type CSI.

Sub-content 2 of portion 2 may be divided into two sub-blocks according to odd-numbered sub-bands and even-numbered sub-bands. Sub-block 1 of sub-content 2 of portion 2 includes a sub-band differential CQI of even-numbered sub-bands of transmission block 2 and a sub-band PMI of even-numbered sub-bands. Sub-block 2 of sub-content 2 of portion 2 includes a sub-band differential CQI of odd-numbered sub-bands of transmission block 2 and a sub-band PMI of odd-numbered sub-bands.

In one embodiment, discarding the part of CSI in the CSI report according to the sub-configuration information and the CSI type information includes discarding a part of second-type contents in second-type sub-configurations, and the part of the second-type contents in the second-type sub-configurations is discarded in one of the following orders:
discarding according to a priority order of the second-type sub-configurations, and, for each second-type sub-configuration, discarding according to a priority order of the second-type contents; or
discarding according to a priority order of the second-type contents, and, for each second-type content, discarding according to a priority order of the second-type sub-configurations.

The second-type sub-configurations comprise any combination of sub-configurations with different priorities, and the second-type contents comprise any combination of CSI of multiple types.

In some embodiments, the part of the second-type contents in the second-type sub-configurations is discarded according to a priority order of the second-type sub-configurations, and within each second-type sub-configuration, is discarded according to a priority order of the second-type contents. The second-type sub-configurations and the second-type contents may include the following:

In some embodiments, the second-type sub-configurations include all sub-configurations, and correspondingly, the priority order of the second-type sub-configurations is: sub-configuration #1 > sub-configuration #2 > ... > sub-configuration #N. The second-type contents include the sub-content 1 in portion 2, the sub-block 1 of sub-content 2 in portion 2, and the sub-block 2 of sub-content 2 in portion 2. Correspondingly, the priority order of the second-type contents is: sub-content 1 in portion 2 > sub-block 1 of sub-content 2 in portion 2 > sub-block 2 of sub-content 2 in portion 2. According to the priority order of the second-type sub-configurations, and within each second-type sub-configuration according to the priority order of the second-type contents, the discard order is: {sub-block 2 of sub-content 2 in portion 2 in sub-configuration #N → sub-block 1 of sub-content 2 in portion 2 in sub-configuration #N → sub-content 1 in portion 2 in sub-configuration #N} → {sub-block 2 of sub-content 2 in portion 2 in sub-configuration #(N-1) → sub-block 1 of sub-content 2 in portion 2 in sub-configuration #(N-1) → sub-content 1 in portion 2 in sub-configuration #(N-1)} → ... → {sub-block 2 of sub-content 2 in portion 2 in sub-configuration #2 → sub-block 1 of sub-content 2 in portion 2 in sub-configuration #2 → sub-content 1 in portion 2 in sub-configuration #2} → {sub-block 2 of sub-content 2 in portion 2 in sub-configuration #1 → sub-block 1 of sub-content 2 in portion 2 in sub-configuration #1 → sub-content 1 in portion 2 in sub-configuration #1}. Based on the sub-configuration information and the CSI type information, a priority of CSI types in each sub-configuration may be determined as: {sub-content 1 in portion 2 in sub-configuration #1 > sub-block 1 of sub-content 2 in portion 2 in sub-configuration #1 > sub-block 2 of sub-content 2 in portion 2 in sub-configuration #1} > ... > {sub-content 1 in portion 2 in sub-configuration #N > sub-block 1 of sub-content 2 in portion 2 in sub-configuration #N > sub-block 2 of sub-content 2 in portion 2 in sub-configuration #N}. During discarding, if remaining information satisfies a resource requirement, discarding is stopped.

In some embodiments, the second-type sub-configurations may include sub-configuration #2, sub-configuration #3, ..., and sub-configuration #N. Correspondingly, the priority order of the second-type sub-configurations is: sub-configuration #2 > sub-configuration #3 > ... > sub-configuration #N. The second-type contents include portion 1, sub-content 1 in portion 2, sub-block 1 of sub-content 2 in portion 2, and sub-block 2 of sub-content 2 in portion 2. Correspondingly, the priority order of the second-type contents is: portion 1 > sub-content 1 in portion 2 > sub-block 1 of sub-content 2 in portion 2 > sub-block 2 of sub-content 2 in portion 2. The discard order is: {sub-block 2 of sub-content 2 in portion 2 in sub-configuration #N → sub-block 1 of sub-content 2 in portion 2 in sub-configuration #N → sub-content 1 in portion 2 in sub-configuration #N → portion 1 in sub-configuration #N} → {sub-block 2 of sub-content 2 in portion 2 in sub-configuration #(N-1) → sub-block 1 of sub-content 2 in portion 2 in sub-configuration #(N-1) → sub-content 1 in portion 2 in sub-configuration #(N-1) → portion 1 in sub-configuration #(N-1)} → ... → {sub-block 2 of sub-content 2 in portion 2 in sub-configuration #2 → sub-block 1 of sub-content 2 in portion 2 in sub-configuration #2 → sub-content 1 in portion 2 in sub-configuration #2 → portion 1 in sub-configuration #2}. During discarding, if remaining information satisfies a resource requirement, discarding is stopped.

In some embodiments, the second-type sub-configurations include sub-configuration #3, sub-configuration #4, ..., and sub-configuration #N. Correspondingly, the priority order of the second-type sub-configurations is: sub-configuration #3 > sub-configuration #4 > ... > sub-configuration #N. The second-type contents include portion 1, sub-content 1 in portion 2, sub-block 1 of sub-content 2 in portion 2, and sub-block 2 of sub-content 2 in portion 2. Correspondingly, the priority order of the second-type contents is: portion 1 > sub-content 1 in portion 2 > sub-block 1 of sub-content 2 in portion 2 > sub-block 2 of sub-content 2 in portion 2. The discard order is: {sub-block 2 of sub-content 2 in portion 2 in sub-configuration #N → sub-block 1 of sub-content 2 in portion 2 in sub-configuration #N → sub-content 1 in portion 2 in sub-configuration #N → portion 1 in sub-configuration #N} → {sub-block 2 of sub-content 2 in portion 2 in sub-configuration #(N-1) → sub-block 1 of sub-content 2 in portion 2 in sub-configuration #(N-1) → sub-content 1 in portion 2 in sub-configuration #(N-1) → portion 1 in sub-configuration #(N-1)} → ... → {sub-block 2 of sub-content 2 in portion 2 in sub-configuration #3 → sub-block 1 of sub-content 2 in portion 2 in sub-configuration #3 → sub-content 1 in portion 2 in sub-configuration #3 → portion 1 in sub-configuration #3}. During discarding, if remaining information satisfies a resource requirement, discarding is stopped.

In some embodiments, the second-type sub-configurations include sub-configuration #2, ..., and sub-configuration #N. Correspondingly, the priority order of the second-type sub-configurations is: sub-configuration #2 > sub-configuration #3 > ... > sub-configuration #N. The second-type contents include portion 1, sub-content 1 in portion 2, sub-block 1 of sub-content 2 in portion 2, and sub-block 2 of sub-content 2 in portion 2. Correspondingly, the priority order of the second-type contents is: portion 1 > sub-content 1 in portion 2 > sub-block 1 of sub-content 2 in portion 2 > sub-block 2 of sub-content 2 in portion 2. In some embodiments, discarding is performed according to the priority order of the second-type contents, and within each second-type content, discarding is performed according to the priority order of the second-type sub-configurations. The discard order is: {sub-block 2 of sub-content 2 in portion 2 in sub-configuration #N → ... → sub-block 2 of sub-content 2 in portion 2 in sub-configuration #2 → sub-block 1 of sub-content 2 in portion 2 in sub-configuration #N → ... → sub-block 1 of sub-content 2 in portion 2 in sub-configuration #2 → sub-content 1 in portion 2 in sub-configuration #N → ... → sub-content 1 in portion 2 in sub-configuration #2 → portion 1 in sub-configuration #N → ... → portion 1 in sub-configuration #2}. During discarding, if remaining information satisfies a resource requirement, discarding is stopped.

In some embodiments, the second-type sub-configurations include sub-configuration #2, sub-configuration #3, ..., and sub-configuration #N. Correspondingly, the priority order of the second-type sub-configurations is: sub-configuration #2 > sub-configuration #3 > ... > sub-configuration #N. The second-type contents include sub-block 1 of sub-content 2 in portion 2 and sub-block 2 of sub-content 2 in portion 2. Correspondingly, the priority order of the second-type contents is: sub-block 1 of sub-content 2 in portion 2 > sub-block 2 of sub-content 2 in portion 2. The discard order is: {sub-block 2 of sub-content 2 in portion 2 in sub-configuration #N → sub-block 1 of sub-content 2 in portion 2 in sub-configuration #N} → {sub-block 2 of sub-content 2 in portion 2 in sub-configuration #(N-1) → sub-block 1 of sub-content 2 in portion 2 in sub-configuration #(N-1)} → ... → {sub-block 2 of sub-content 2 in portion 2 in sub-configuration #2 → sub-block 1 of sub-content 2 in portion 2 in sub-configuration #2}. During discarding, if remaining information satisfies a resource requirement, discarding is stopped.

In some embodiments, the second-type contents do not include the first-type CSI.

In some embodiments, the second-type contents do not include the first-type CSI and the second-type CSI.

In one embodiment, discarding the part of CSI in the CSI report according to the sub-configuration information and the CSI type information includes discarding a part of first-type contents in second-type sub-configurations, and the part of the first-type contents in the second-type sub-configurations is discarded in one of the following orders:
discarding according to a priority order of the second-type sub-configurations, and, for each second-type sub-configuration, discarding according to a priority order of the first-type contents;
discarding according to a priority order of the first-type contents, and, for each first-type content, discarding according to a priority order of the second-type sub-configurations; or
discarding according to a priority order of the first-type contents, wherein all second-type sub-configurations corresponding to each first-type content have a same priority.

The second-type sub-configurations comprise any combination of sub-configurations with different priorities, and the first-type contents comprise any combination of CSI of multiple types.

In some embodiments, the first-type contents and the second-type contents together constitute all CSI in one sub-configuration. In some embodiments, the first-type contents and the second-type contents together include the second-type CSI and the third-type CSI. In some embodiments, the part of the first-type contents in the second-type sub-configurations is discarded according to the priority order of the first-type contents. All the second-type sub-configurations in each of the first-type contents have the same priority. The first-type contents may include portion 1 and sub-content 1 in portion 2. A priority of the portion 1 is higher than a priority of the sub-content 1 in portion 2. When the discarding is performed, if the remaining information satisfies the resource requirement, the discarding is stopped.

In one embodiment, discarding the part of CSI in the CSI report according to the sub-configuration information and the CSI type information includes discarding a part of fourth-type contents in first-type sub-configurations, and the part of the fourth-type contents in the first-type sub-configurations is discarded in one of the following orders:
discarding according to a priority order of the first-type sub-configurations, and, for each first-type sub-configuration, discarding according to a priority order of the fourth-type contents;
discarding according to a priority order of the first-type sub-configurations, wherein all fourth-type contents in each first-type sub-configuration have a same priority order;
discarding according to a priority order of the fourth-type contents, and, for each fourth-type content, discarding according to a priority order of the first-type sub-configurations;
discarding according to a priority order of the fourth-type contents, wherein all first-type sub-configurations corresponding to each fourth-type content have a same priority order; or
discarding the fourth-type contents in the first-type sub-configurations.

The first-type sub-configurations include any combination of different sub-configurations, and the fourth-type contents include any combination of CSI of multiple types.

In some embodiments, the third-type contents and the fourth-type contents together constitute all CSI in one sub-configuration. The third-type contents are not discarded. The first-type sub-configurations and the second-type sub-configurations together constitute all sub-configurations for CSI reporting.

The first-type sub-configurations at least include sub-configuration #1. Alternatively, the first-type sub-configurations at least include a sub-configuration with a highest priority. In some embodiments, the part of the fourth-type contents in the first-type sub-configurations are discarded according to the priority order of the first-type sub-configurations, and are discarded according to the priority order of the fourth-type contents in each of the first-type sub-configurations. The first-type sub-configurations and the fourth-type contents may include the following:
The first-type sub-configurations may include sub-configuration #1 and sub-configuration #2.
The fourth-type contents may include sub-block 1 of sub-content 2 in portion 2 and sub-block 2 of sub-content 2 in portion 2.
The first-type sub-configurations may include sub-configuration #1.
The fourth-type contents may include sub-block 1 of sub-content 2 in portion 2 and sub-block 2 of sub-content 2 in portion 2.

A priority of the sub-block 1 of sub-content 2 in portion 2 is higher than a priority of the sub-block 2 of sub-content 2 in portion 2. A priority of the sub-configuration #1 is higher than a priority of the sub-configuration #2.

In one embodiment, a part of first-type contents in third-type sub-configurations is discarded in one of the following orders:
The part of the first-type contents in the third-type sub-configurations are discarded according to a priority order of the third-type sub-configurations, and are discarded according to a priority order of the first-type contents in each of the third-type sub-configurations.

The part of the first-type contents in the third-type sub-configurations are discarded according to a priority order of the first-type contents, and are discarded according to a priority order of the third-type sub-configurations in each of the first-type contents.

The part of the first-type contents in the third-type sub-configurations is discarded according to a priority order of the first-type contents. All the third-type sub-configurations in each of the first-type contents have a same priority.

The third-type sub-configurations include any combination of sub-configurations with different priorities. The first-type contents include any combination of CSI of multiple types.

In the present embodiment, the third-type sub-configurations include all sub-configurations except sub-configuration #1 (i.e., a sub-configuration with a highest priority). The first-type contents include first-type CSI. In some embodiments, the first-type contents may include first-type CSI and second-type CSI.

The CSI reporting method is exemplarily described below with reference to different embodiments.

### 1. UE capabilities

The following are various examples that may be indicated by the UE capability signaling, and a UE capability may include one or more combinations listed below.
(1) A UE capability is used to indicate whether the UE reports support for configuring L sub-configurations in one CSI report configuration.
(2) A UE capability is used to indicate whether the UE reports support for configuring parameters of multiple types for sub-configurations in one CSI report configuration.
(3) A UE capability is used to indicate whether the UE reports support for configuring a rank indication restriction, a codebook subset restriction, and a port subset indication in one sub-configuration.
(4) A UE capability is used to indicate whether the UE reports support for configuring a resource list in one sub-configuration.
(5) A UE capability is used to indicate whether the UE reports support for configuring one of the following in one sub-configuration: one or more power offsets, one or more power deviation values, or one or more power offset indices.
(6) A UE capability is used to indicate whether the UE reports support for configuring a rank indication restriction, a codebook subset restriction, and a port subset indication in one sub-configuration, and configuring one of the following in the one sub-configuration: one or more power offsets, one or more power deviation values, or one or more power offset indices.
(7) A UE capability is used to indicate whether the UE reports support for configuring a resource list in one sub-configuration, and configuring one of the following in the one sub-configuration: one or more power offsets, one or more power deviation values, or one or more power offset indices.
(8) A UE capability is used to indicate whether the UE reports support for configuring, in one sub-configuration, one of the following: a rank indication restriction, a codebook subset restriction, and a port subset indication, or a resource list; and one of the following: one or more power offsets, one or more power deviation values, or one or more power offset indices.
(9) A UE capability is used to indicate whether the UE reports support for triggering N sub-configurations among the L sub-configurations through downlink control information (DCI) or a media access control (MAC) control element (CE).
(10) A UE capability is used to indicate whether the UE reports support for triggering N sub-configurations among the L sub-configurations through DCI.
(11) A UE capability is used to indicate whether the UE reports support for triggering N sub-configurations among the L sub-configurations in a semi-persistent scheduling (SPS) CSI report configuration through a MAC CE.
(12) A UE capability is used to indicate whether the UE reports support for triggering N sub-configurations among the L sub-configurations in an aperiodic CSI report configuration through DCI.
(13) A UE capability is used to indicate whether the UE reports support for triggering N sub-configurations among the L sub-configurations in an SPS CSI report configuration through DCI or a MAC CE.
(14) A UE capability is used to indicate whether the UE reports support for triggering N sub-configurations among the L sub-configurations in an SPS CSI report configuration through DCI.
(15) A UE capability is used to indicate whether the UE reports support for triggering N sub-configurations among the L sub-configurations in a periodic CSI report configuration through DCI or a MAC CE.
(16) A UE capability is used to indicate whether the UE reports support for reporting N sets of CSI information in one CSI report.
(17) A UE capability is used to indicate a maximum value of L reported by the UE, where candidate values of the maximum value of L include at least one of the following: {2, 3, 4}.
(18) A UE capability is used to indicate whether the UE reports support for overhead-saving reporting of multiple sets of CSI information.
(19) A UE capability is used to indicate whether the UE reports support for CSI processing unit (CPU: CSI processing unit) computation for reporting multiple sets of CSI information.
(20) A UE capability is used to indicate whether the UE reports support for CPU computation for overhead-saving reporting of multiple sets of CSI information.
(21) A UE capability is used to indicate CSI types supported by the UE for reporting multiple sets of CSI information, where the CSI types include at least one of the following: first-type CSI, second-type CSI, sub-block 1 of third-type CSI, or sub-block 2 of third-type CSI.

Embodiment 1: the first UE capability indicates whether the UE reports support for configuring L sub-configurations in one CSI report configuration, where each sub-configuration is configured with the rank indication restriction, the codebook subset restriction, and the port subset indication, or is configured with a resource list. If the UE reports support for the first UE capability, it indicates that the UE reports support for configuring L sub-configurations in one CSI report configuration, and the sub-configurations may be configured with the rank indication restriction, the codebook subset restriction, and the port subset indication, or may be configured with a resource list. All L sub-configurations configured in the one CSI report configuration are only permitted to use one configuration type, where all L sub-configurations are configured with the rank indication restriction, the codebook subset restriction, and the port subset indication, or all L sub-configurations are configured with a resource list.

Embodiment 2: the second UE capability indicates whether the UE reports support for configuring L sub-configurations in one CSI report configuration, where each sub-configuration is configured with the rank indication restriction, the codebook subset restriction, and the port subset indication.

The third UE capability indicates whether the UE reports support for configuring L sub-configurations in one CSI report configuration, where each sub-configuration is configured with a resource list. In the present embodiment, the two configurations for sub-configurations are reported through the second UE capability and the third UE capability, respectively. Compared with Embodiment 1, the UE capabilities in Embodiment 2 are classified in a more detailed manner, and the UE is not required to support the two configuration types at the same time.

Embodiment 3: the fourth UE capability indicates whether the UE reports support for configuring sub-configurations with parameters of multiple types in one CSI report configuration. If the UE reports support for the fourth UE capability, different sub-configurations among the L sub-configurations in the one CSI report configuration may be configured with parameters of different types. For example, L1 sub-configurations are configured with the rank indication restriction, the codebook subset restriction, and the port subset indication, and L2 sub-configurations are configured with one of the following: one or more power offsets, one or more power deviation values, or one or more power offset indices, where L1+L2=L.

Embodiment 4: the fifth UE capability indicates whether the UE reports support for triggering N sub-configurations among the L sub-configurations in an aperiodic CSI report configuration through downlink control information (DCI).

The sixth UE capability indicates whether the UE reports support for triggering N sub-configurations among the L sub-configurations in a semi-persistent scheduling (SPS) CSI report configuration through DCI or a media access control (MAC) control element (CE). In the present embodiment, the aperiodic CSI report configuration and the SPS CSI report configuration are reported through the fifth UE capability and the sixth UE capability, respectively, so that the UE may independently support one of the UE capabilities for CSI reporting, thereby reducing a requirement on UE capability and facilitating implementation by the UE.

Embodiment 5: the UE reports support for configuring parameters of multiple types in one sub-configuration of one CSI report. In response to the UE reporting support for the UE capability, the base station may configure parameters of multiple types in sub-configurations among the L sub-configurations in one CSI report. Parameters configured in different sub-configurations may be different.

Embodiment 6: the UE reports support for configuring L sub-configurations in one CSI report and reports a maximum value of L supported by the UE. In response to the UE capability, the base station may configure, in one CSI report, a quantity of sub-configurations up to the maximum value of L.

Embodiment 7: the UE reports support for overhead-saving reporting of multiple sets of CSI information. In response to the UE capability, the base station may configure an enabling signaling for overhead-saving reporting of multiple sets of CSI information.

Embodiment 8: the UE reports support for overhead-saving reporting of multiple sets of CSI information. In response to the UE capability, the UE may report multiple sets of CSI information with overhead saving.

Embodiment 9: the UE reports support for CPU computation for overhead-saving reporting of multiple sets of CSI information. In response to the UE capability, multiple sets of CSI information may be calculated based on the CPU computation for overhead-saving reporting of multiple sets of CSI information.

Embodiment 10: the UE reports CSI types supported by the UE for reporting multiple sets of CSI information. In response to the UE capability, multiple sets of CSI information may be reported based on the CSI types.

Embodiment 11: the UE reports a priority type supported by the UE. In response to the UE capability, multiple sets of CSI information may be reported based on the priority type.

### 2. Joint configurations

In the preceding description, three types of parameters may be configured in a sub-configuration:
1) the first-type parameter includes the rank indication restriction, the codebook subset restriction, and the port subset indication;
2) the third-type parameter includes a resource list; and
3) the second-type parameter includes one of the following: one or more power offsets, one or more power deviation values, or one or more power offset indices.

In response to different UE capabilities being reported, requirements for sub-configurations in a CSI report configuration may be different.

In some embodiments, only parameters of one type may be configured in sub-configurations in one CSI report configuration. In other words, parameters of the same type are configured in all sub-configurations.

In some embodiments, one CSI report configuration includes multiple sub-configurations, and each sub-configuration includes only one of the above three types of parameters. For example, one CSI report configuration includes L sub-configurations, where L1 sub-configurations are configured with the third-type parameter, L2 sub-configurations are configured with the second-type parameter, and where L1+L2=L.

In some embodiments, within one CSI report configuration, sub-configurations configured with the first-type parameter and sub-configurations configured with the third-type parameter are not allowed to coexist in the same CSI report configuration.

In some embodiments, one CSI report configuration includes multiple sub-configurations, and each sub-configuration is configured with parameters of at least one of the above three types. For example, one CSI report configuration includes L sub-configurations, where L1 sub-configurations are configured with the third-type parameter, L2 sub-configurations are configured with the second-type parameter and the third-type parameter, and where L1+L2=L.

In some embodiments, one CSI report configuration includes multiple sub-configurations, and each sub-configuration is configured with the first-type parameter or the third-type parameter, and is further configured with the second-type parameter. All sub-configurations are configured with a same parameter-type combination. For example, each of L sub-configurations is configured with the first-type parameter and the second-type parameter. In another example, each of the L sub-configurations is configured with the second-type parameter and the third-type parameter.

In some embodiments, for an aperiodic CSI report or a semi-persistent CSI report, one CSI report configuration includes L sub-configurations, and each sub-configuration is configured with parameters of at least one of the above three types. When N sub-configurations among the L sub-configurations are triggered using downlink control information (DCI) or a media access control (MAC) control element (CE), the N sub-configurations cannot include both (i) a sub-configuration configured with the first-type parameter and (ii) a sub-configuration configured with the third-type parameter. In other embodiments, the N sub-configurations are configured with parameters of the same type.

In some embodiments, when a number of configured power offset values for each CSI-RS resource in a resource setting associated with a CSI-ReportConfig is greater than 1, a sub-configuration in the CSI-ReportConfig is at least configured with the second-type parameter.

In some embodiments, in response to the UE reporting support for configuring parameters of multiple types in one sub-configuration of one CSI report, one CSI report configuration includes L sub-configurations, and each of the L sub-configurations is configured with one or both of the second-type parameter and the third-type parameter. A number of parameters in the second-type parameter is equal to a number of CSI-RS resources in a resource set associated with the CSI report. The parameters in the second-type parameter include one of the following: one or more power offsets, one or more power deviation values, or one or more power offset indices.

In some embodiments, one CSI report configuration includes L sub-configurations. One or more sub-configurations are configured with the third-type parameter, a number of resources associated with each sub-configuration is the same, and the i-th CSI-RS resource associated with different sub-configurations is quasi-co-located with respect to "QCL type D". For example, one CSI report configuration includes two sub-configurations, with sub-configuration #1 associated with {CSI-RS resource #1, CSI-RS resource #2} and sub-configuration #2 associated with {CSI-RS resource #3, CSI-RS resource #4}. A first CSI-RS resource associated with sub-configuration #1 is CSI-RS resource #1, and a first CSI-RS resource associated with sub-configuration #2 is CSI-RS resource #3. In this case, CSI-RS resource #1 and CSI-RS resource #3 are quasi-co-located with respect to "QCL type D", and CSI-RS resource #2 and CSI-RS resource #4 are quasi-co-located with respect to "QCL type D".

In some embodiments, one CSI report configuration includes L sub-configurations. One or more sub-configurations are configured with the third-type parameter, a number of resources associated with each sub-configuration is the same, and the i-th CSI-RS resource associated with different sub-configurations is quasi-co-located. For example, one CSI report configuration includes two sub-configurations, with sub-configuration #1 associated with {CSI-RS resource #1, CSI-RS resource #2} and sub-configuration #2 associated with {CSI-RS resource #3, CSI-RS resource #4}. A first CSI-RS resource associated with sub-configuration #1 is CSI-RS resource #1, and a first CSI-RS resource associated with sub-configuration #2 is CSI-RS resource #3. In this case, CSI-RS resource #1 and CSI-RS resource #3 are quasi-co-located, and CSI-RS resource #2 and CSI-RS resource #4 are quasi-co-located.

In some embodiments, one CSI report configuration includes L sub-configurations. One or more sub-configurations are configured with the third-type parameter. In response to the UE reporting support for overhead-saving reporting of multiple sets of CSI information, a number of resources associated with each sub-configuration is the same, and the i-th CSI-RS resource associated with different sub-configurations is quasi-co-located.

In some embodiments, one CSI report configuration includes L sub-configurations. One or more sub-configurations are configured with the third-type parameter. In response to the UE reporting support for overhead-saving reporting of multiple sets of CSI information, a number of resources associated with each sub-configuration is the same, and the i-th CSI-RS resource associated with different sub-configurations is quasi-co-located with respect to "QCL type D".

In some embodiments, one CSI report configuration includes L sub-configurations. One or more sub-configurations are configured with the third-type parameter. In response to the UE reporting support for reporting multiple sets of CSI information of a common CRI, a number of resources associated with each sub-configuration is the same, and the i-th CSI-RS resource associated with different sub-configurations is quasi-co-located.

In some embodiments, one CSI report configuration includes L sub-configurations. One or more sub-configurations are configured with the third-type parameter. In response to the UE reporting support for reporting multiple sets of CSI information of a common CRI, a number of resources associated with each sub-configuration is the same, and the i-th CSI-RS resource associated with different sub-configurations is quasi-co-located with respect to "QCL type D".

### 3. CSI information discarding rule / priority rule

In some embodiments, a CSI report is transmitted in two portions. Portion 1 includes "CRI, RI, a wideband CQI for transmission block 1, and a subband differential CQI for transmission block 1", and the contents are ordered as recited above. If any of the above contents is not reported in the CSI report, the corresponding content is skipped. Portion 2 includes two sub-contents. Sub-content 1 includes "a wideband CQI for transmission block 2, a layer indicator (LI), and a wideband PMI", and the contents are ordered as recited above. If any of the above contents is not reported in the CSI report, the corresponding content is skipped. Sub-content 2 of portion 2 includes "a subband differential CQI for even subbands of transmission block 2, a subband PMI for even subbands, a subband differential CQI for odd subbands of transmission block 2, and a subband PMI for odd subbands", and the contents are ordered as recited above. If any of the above contents is not reported in the CSI report, the corresponding content is skipped.

Under certain conditions, for example, when resources of a physical uplink shared channel (PUSCH) are insufficient to carry all bits of the CSI report, some contents in the CSI report are discarded, i.e., not transmitted. A discarding order is determined according to priority, and discarding is performed from lower priority to higher priority.

Embodiment 1: In some embodiments, portion 1 of each sub-configuration is not discarded, and remaining contents are discarded according to an order of sub-configurations. Within each sub-configuration, a priority order is: sub-content 1 of portion 2 > sub-block 1 of sub-content 2 of portion 2 > sub-block 2 of sub-content 2 of portion 2, and a corresponding discarding order is:
{sub-configuration #N: sub-block 2 of sub-content 2 of portion 2 → sub-block 1 of sub-content 2 of portion 2 → sub-content 1 of portion 2} → {sub-configuration #(N-1): sub-block 2 of sub-content 2 of portion 2 → sub-block 1 of sub-content 2 of portion 2 → sub-content 1 of portion 2} → ... → {sub-configuration #1: sub-block 2 of sub-content 2 of portion 2 → sub-block 1 of sub-content 2 of portion 2 → sub-content 1 of portion 2}.

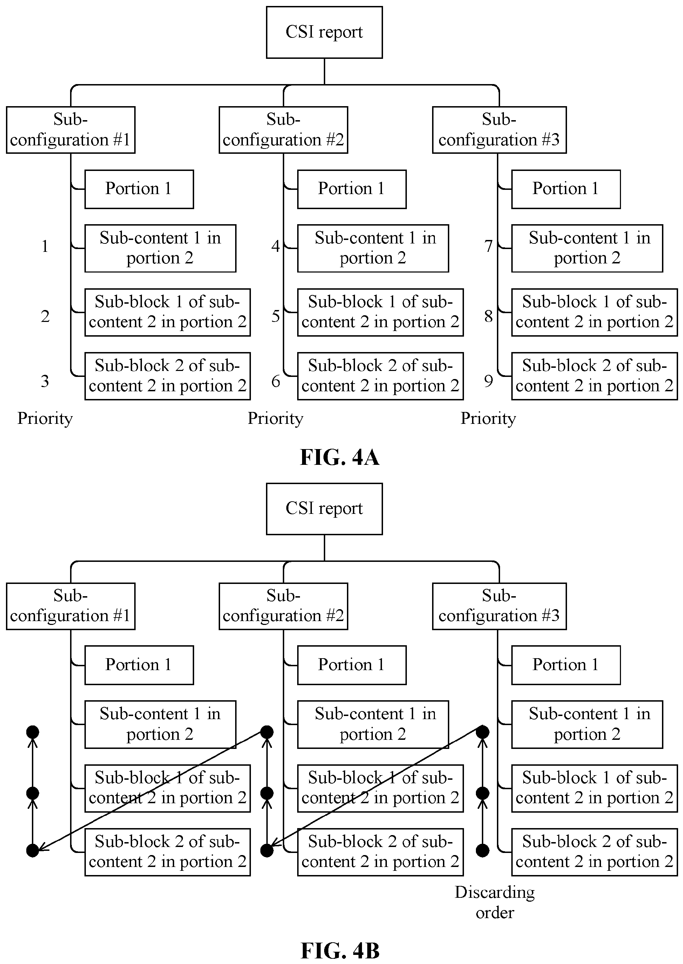

FIG. 4A is a schematic diagram illustrating a first priority order of respective portions/parts of CSI information in a CSI report according to an embodiment. Taking N = 3 as an example, priority values of the respective parts in each sub-configuration are shown in FIG. 4A, and a corresponding discarding order is shown in FIG. 4B. FIG. 4B is a schematic diagram illustrating an example discarding order of the respective parts of CSI information in a CSI report according to an embodiment. The discarding order is:

{sub-configuration #3: sub-block 2 of sub-content 2 of portion 2 → sub-block 1 of sub-content 2 of portion 2 → sub-content 1 of portion 2} → {sub-configuration #2: sub-block 2 of sub-content 2 of portion 2 → sub-block 1 of sub-content 2 of portion 2 → sub-content 1 of portion 2} → ··· → {sub-configuration #1: sub-block 2 of sub-content 2 of portion 2 → sub-block 1 of sub-content 2 of portion 2 → sub-content 1 of portion 2}.

In some embodiments, priority among sub-configurations is determined according to one of the following: a high-layer signaling configuration, a predefined rule, or a sub-configuration index value. For example, the high-layer signaling configures priority information of the sub-configurations, and each sub-configuration corresponds to a respective priority. For another example, priority among the sub-configurations is predefined. For another example, priority among the sub-configurations is determined according to the index value, where a greater index value indicates a lower priority.

Embodiment 2: In some embodiments, contents of a sub-configuration having a highest priority are not discarded, and remaining contents are discarded according to a priority order of the sub-configurations. Within each sub-configuration, a priority order is: portion 1 > sub-content 1 of portion 2 > sub-block 1 of sub-content 2 of portion 2 > sub-block 2 of sub-content 2 of portion 2. For example, the discarding order is:
{sub-configuration #N: sub-block 2 of sub-content 2 of portion 2 → sub-block 1 of sub-content 2 of portion 2 → sub-content 1 of portion 2 → portion 1} → {sub-configuration #(N-1): sub-block 2 of sub-content 2 of portion 2 → sub-block 1 of sub-content 2 of portion 2 → sub-content 1 of portion 2 → portion 1} → ··· → {sub-configuration #2: sub-block 2 of sub-content 2 of portion 2 → sub-block 1 of sub-content 2 of portion 2 → sub-content 1 of portion 2 → portion 1}.

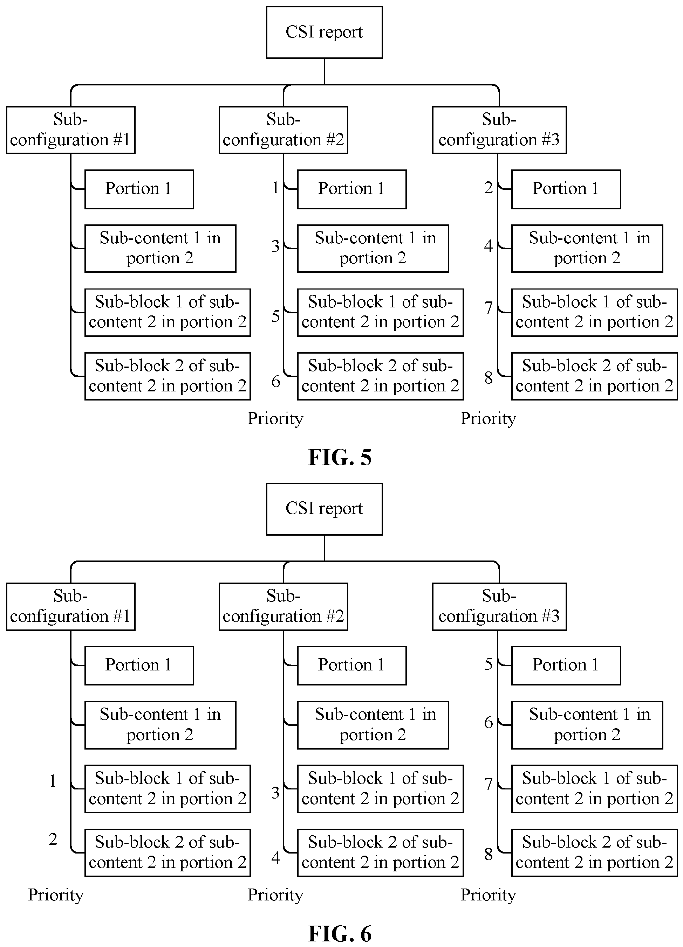

FIG. 5 is a schematic diagram illustrating a second priority order of respective parts of CSI information in a CSI report according to an embodiment. As shown in FIG. 5, taking N = 3 as an example, a corresponding discarding order is:
{sub-configuration #3: sub-block 2 of sub-content 2 of portion 2 → sub-block 1 of sub-content 2 of portion 2 → sub-content 1 of portion 2 → portion 1} → {sub-configuration #2: sub-block 2 of sub-content 2 of portion 2 → sub-block 1 of sub-content 2 of portion 2 → sub-content 1 of portion 2 → portion 1}.

Embodiment 3: In some embodiments, first-type contents in first-type sub-configurations are not discarded, and remaining contents are discarded according to an order of the sub-configurations. Within each sub-configuration, a priority order is: sub-content 1 of portion 2 > sub-block 1 of sub-content 2 of portion 2 > sub-block 2 of sub-content 2 of portion 2.

The first-type sub-configurations satisfy one of the following: a sub-configuration indicated by high-layer signaling; a predefined sub-configuration; or top N sub-configurations with higher priorities, where N is a positive integer less than 3.

The first-type contents include at least one of the following: portion 1, or sub-content 1 of portion 2.

For example, the first-type sub-configurations include sub-configuration #1 and sub-configuration #2, and the first-type contents include portion 1 and sub-content 1 of portion 2. In this case, the discarding order is:
{sub-configuration #N: sub-block 2 of sub-content 2 of portion 2 → sub-block 1 of sub-content 2 of portion 2 → sub-content 1 of portion 2 → portion 1} → {sub-configuration #(N-1): sub-block 2 of sub-content 2 of portion 2 → sub-block 1 of sub-content 2 of portion 2 → sub-content 1 of portion 2 → portion 1} → ··· → {sub-configuration #3: sub-block 2 of sub-content 2 of portion 2 → sub-block 1 of sub-content 2 of portion 2 → sub-content 1 of portion 2 → portion 1 → sub-configuration #2: sub-block 2 of sub-content 2 of portion 2 → sub-block 1 of sub-content 2 of portion 2 → sub-configuration #1: sub-block 2 of sub-content 2 of portion 2 → sub-block 1 of sub-content 2 of portion 2}.

FIG. 6 is a schematic diagram illustrating a third priority order of respective parts of CSI information in a CSI report according to an embodiment. As shown in FIG. 6, taking N = 3 as an example, a corresponding discarding order is:
{sub-configuration #3: sub-block 2 of sub-content 2 of portion 2 → sub-block 1 of sub-content 2 of portion 2 → sub-content 1 of portion 2 → portion 1 → sub-configuration #2: sub-block 2 of sub-content 2 of portion 2 → sub-block 1 of sub-content 2 of portion 2 → sub-configuration #1: sub-block 2 of sub-content 2 of portion 2 → sub-block 1 of sub-content 2 of portion 2}.

Embodiment 4: second-type contents in second-type sub-configurations are discarded first, and discarding is performed according to an order of the sub-configurations. Within each sub-configuration, a priority order is: sub-block 1 of sub-content 2 of portion 2 > sub-block 2 of sub-content 2 of portion 2. Thereafter, first-type contents in the second-type sub-configurations are discarded, and discarding is performed according to the order of the sub-configurations. In some embodiments, fourth-type contents in first-type sub-configurations may be further discarded thereafter. In some embodiments, the fourth-type contents in the first-type sub-configurations are not discarded.

In some embodiments, the second-type contents include sub-block 1 of sub-content 2 of portion 2 and sub-block 2 of sub-content 2 of portion 2. The first-type contents include portion 1. The fourth-type contents include sub-block 1 of sub-content 2 of portion 2 and sub-block 2 of sub-content 2 of portion 2.

The second-type sub-configurations are sub-configurations other than the first-type sub-configurations.

In some embodiments, portion 1 is discarded as a whole, that is, portion 1 of the second-type sub-configurations has a same priority.

In some embodiments, sub-content 1 of portion 2 is discarded as a whole, that is, sub-content 1 of portion 2 of the second-type sub-configurations has a same priority.

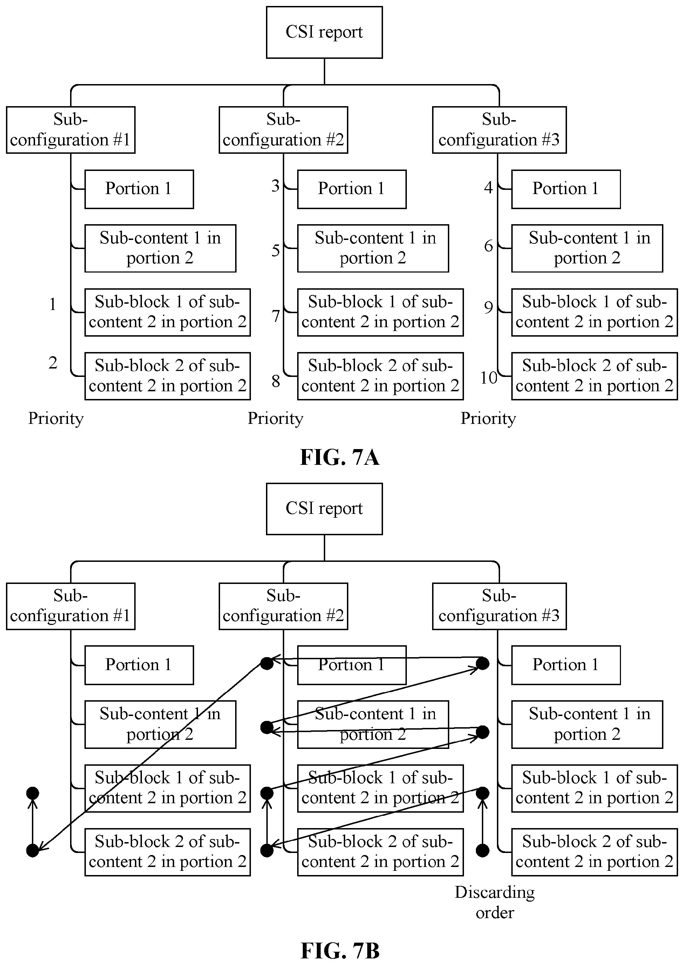

FIG. 7A is a schematic diagram illustrating a fourth priority order of respective parts of CSI information in a CSI report according to an embodiment. Taking N = 3 as an example, priorities of contents of each part in each sub-configuration are shown in FIG. 7A, and a corresponding discarding order is shown in FIG. 7B. FIG. 7B is another schematic diagram illustrating a discarding order of respective parts of CSI information in a CSI report according to an embodiment. The discarding order is as follows:
{sub-configuration #3: sub-block 2 of sub-content 2 of portion 2 → sub-block 1 of sub-content 2 of portion 2 → sub-configuration #2: sub-block 2 of sub-content 2 of portion 2 → sub-block 1 of sub-content 2 of portion 2 → sub-configuration #3: sub-content 1 of portion 2 → sub-configuration #2: sub-content 1 of portion 2 → sub-configuration #3: portion 1 → sub-configuration #2: portion 1 → sub-configuration #1: sub-block 2 of sub-content 2 of portion 2 → sub-block 1 of sub-content 2 of portion 2} .

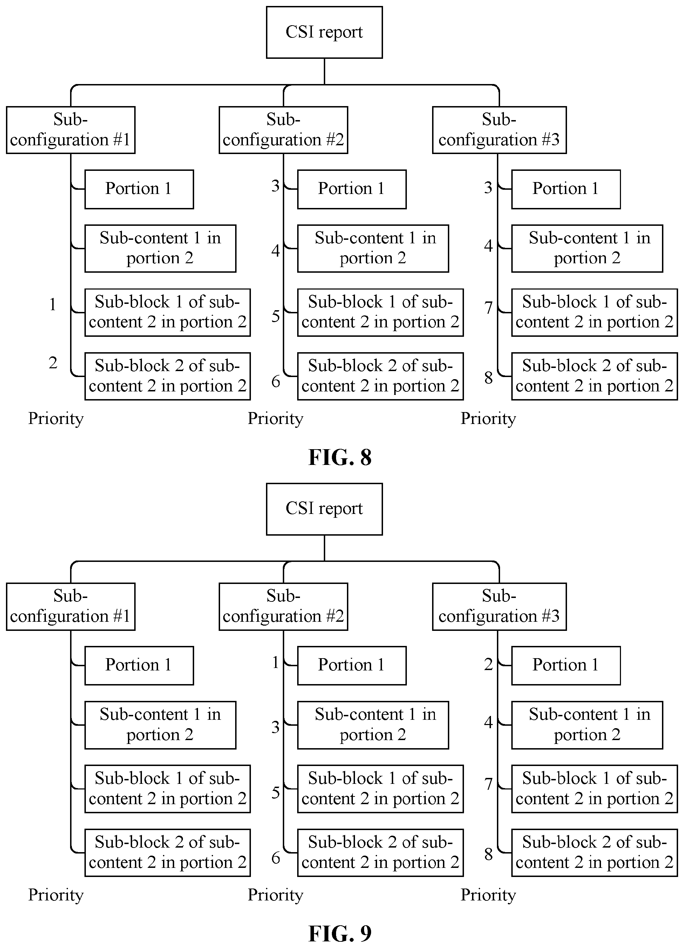

FIG. 8 is a schematic diagram illustrating a fifth priority order of respective parts of CSI information in a CSI report according to an embodiment. As shown in FIG. 8, taking N = 3 as an example, a corresponding discarding order is as follows:
{sub-configuration #3: sub-block 2 of sub-content 2 of portion 2 → sub-block 1 of sub-content 2 of portion 2 → sub-configuration #2: sub-block 2 of sub-content 2 of portion 2 → sub-block 1 of sub-content 2 of portion 2 → sub-content 1 of portion 2 of each of sub-configuration #2 and sub-configuration #3 → portion 1 of each of sub-configuration #2 and sub-configuration #3 → sub-configuration #1: sub-block 2 of sub-content 2 of portion 2 → sub-block 1 of sub-content 2 of portion 2}.

For example, discarding part of CSI according to priority information by a UE includes: (a) discarding according to a priority order of second-type sub-configurations, and discarding, in each sub-configuration, according to a priority order of second-type contents; and (b) discarding according to a priority order of first-type contents, and discarding, in each content, according to the priority order of the sub-configurations. The second-type contents include sub-block 1 of sub-content 2 of portion 2 and sub-block 2 of sub-content 2 of portion 2. The first-type contents include portion 1 and sub-content 1 of portion 2. The second-type sub-configurations include sub-configuration #2 to sub-configuration #N. A priority order is as shown in FIG. 9. FIG. 9 is a schematic diagram illustrating a sixth priority order of respective parts of CSI information in a CSI report according to an embodiment. As shown in FIG. 9, taking N = 3 as an example, a corresponding discarding order is as follows:
{sub-configuration #3: sub-block 2 of sub-content 2 of portion 2 → sub-block 1 of sub-content 2 of portion 2 → sub-configuration #2: sub-block 2 of sub-content 2 of portion 2 → sub-block 1 of sub-content 2 of portion 2 → sub-content 1 of portion 2 of sub-configuration #3 → sub-content 1 of portion 2 of sub-configuration #2 → portion 1 of sub-configuration #3 → portion 1 of sub-configuration #2}.

In some embodiments, third-type contents of first-type sub-configurations are not discarded, which means that a priority of the third-type contents of the first-type sub-configurations does not need to be determined.

Discarding may also be referred to as omitting, deleting, skipping, or the like.

In some embodiments, a priority is determined only for CSI types of sub-configurations that are discardable.

In some embodiments, second-type contents of second-type sub-configurations are discarded first according to a first order. During the discarding, if remaining CSI information satisfies a code-rate requirement or a resource requirement, the discarding is stopped. If all second-type contents of the second-type sub-configurations are discarded and the requirement is still not satisfied, fourth-type contents of first-type sub-configurations are discarded according to a second order. During the discarding, if the remaining CSI information satisfies the code-rate requirement or the resource requirement, the discarding is stopped.

The first-type sub-configurations include at least sub-configuration 1.

The second-type sub-configurations include sub-configurations other than the first-type sub-configurations.

The second-type contents include at least sub-block 1 of third-type CSI and sub-block 2 of third-type CSI.

The fourth-type contents include at least sub-block 1 of third-type CSI or sub-block 2 of third-type CSI.

In some embodiments, second-type contents of second-type sub-configurations are discarded first according to a first order. During the discarding, if remaining CSI information satisfies a code-rate requirement or a resource requirement, the discarding is stopped. If all second-type contents of the second-type sub-configurations are discarded and the requirement is still not satisfied, fourth-type contents of first-type sub-configurations are discarded according to a second order. During the discarding, if the remaining CSI information satisfies the code-rate requirement or the resource requirement, the discarding is stopped. If all fourth-type contents of the first-type sub-configurations are discarded and the requirement is still not satisfied, first-type contents of second-type sub-configurations are discarded according to a third order. During the discarding, if the remaining CSI information satisfies the code-rate requirement or the resource requirement, the discarding is stopped.

In some embodiments, the fourth-type contents include at least second-type CSI.

In some embodiments, the first order, the second order, and/or the third order is any one of the following:
discarding according to a priority order of sub-configurations, and discarding, in each sub-configuration, according to a priority order of contents;
discarding according to the priority order of the sub-configurations, wherein contents of each sub-configuration have a same priority;
discarding according to the priority order of the contents, and discarding, in each content, according to the priority order of the sub-configurations;
discarding according to the priority order of the contents, wherein, for each content, all sub-configurations have a same priority; or
discarding contents in sub-configurations.

In some embodiments, second-type contents of second-type sub-configurations are discarded first according to a first order. During the discarding, if remaining CSI information satisfies a code-rate requirement or a resource requirement, the discarding is stopped. If all second-type contents of the second-type sub-configurations are discarded and the requirement is still not satisfied, first-type contents of third-type sub-configurations are discarded according to a second order. During the discarding, if the remaining CSI information satisfies the code-rate requirement or the resource requirement, the discarding is stopped.

In some embodiments, the second-type sub-configurations may include all sub-configurations.

For example, second-type sub-configurations include all sub-configurations; third-type sub-configurations include sub-configurations other than sub-configuration #1; second-type contents include sub-block 1 of third-type CSI and sub-block 2 of third-type CSI; and first-type contents include first-type CSI and second-type CSI. The first order includes discarding according to a priority order of sub-configurations and discarding, in each sub-configuration, according to a priority order of contents. The second order includes discarding according to the priority order of the contents and discarding, in each content, according to the priority order of the sub-configurations. A corresponding discarding order is as follows:
{sub-block 2 of third-type CSI of sub-configuration #N → sub-block 1 of third-type CSI of sub-configuration #N} → {sub-block 2 of third-type CSI of sub-configuration #(N-1) → sub-block 1 of third-type CSI of sub-configuration #(N-1)} → ... → {sub-block 2 of third-type CSI of sub-configuration #1 → sub-block 1 of third-type CSI of sub-configuration #1} → {second-type CSI of sub-configuration #N → second-type CSI of sub-configuration #(N-1) → ... → second-type CSI of sub-configuration #2} → {first-type CSI of sub-configuration #N → first-type CSI of sub-configuration #(N-1) → ... → first-type CSI of sub-configuration #2}.

In some embodiments, the priority is determined according to sub-configuration information and CSI type information. The sub-configuration information includes one of the following: a sub-configuration priority or a sub-configuration index. The CSI type information includes a CSI type priority. The CSI type may include first-type CSI, second-type CSI, sub-block 1 of third-type CSI, and sub-block 2 of third-type CSI.

The sub-configuration priority may be determined according to one of the following: high-layer configuration signaling, definition information, or an index.

In some embodiments, the greater an index value of a sub-configuration, the lower the priority of the sub-configuration. In some embodiments, the CSI type priority satisfies: first-type CSI > second-type CSI > sub-block 1 of third-type CSI > sub-block 2 of third-type CSI.

In some embodiments, sub-block 1 of third-type CSI includes odd sub-bands of the third-type CSI, and sub-block 2 of third-type CSI includes even sub-bands of the third-type CSI. In some embodiments, sub-block 1 of third-type CSI includes even sub-bands of the third-type CSI, and sub-block 2 of third-type CSI includes odd sub-bands of the third-type CSI.

In some embodiments, a CSI type that is discardable is not considered in priority determination.

In some embodiments, for the same CSI type, a priority of the CSI type in a lower-priority sub-configuration is lower than a priority of the CSI type in a higher-priority sub-configuration.

In some embodiments, within a lower-priority sub-configuration, a priority of a lower-priority CSI type is lower than a priority of a higher-priority CSI type.

In some embodiments, for a CSI type having a same CSI type priority, a priority of the CSI type in a lower-priority sub-configuration is lower than a priority of the CSI type in a higher-priority sub-configuration.

In some embodiments, a priority of a higher-priority CSI type in a lower-priority sub-configuration is lower than a priority of a lower-priority CSI type in a higher-priority sub-configuration.

In some embodiments, a priority of a higher-priority CSI type in a lower-priority sub-configuration is higher than a priority of a lower-priority CSI type in a higher-priority sub-configuration.

In some embodiments, a priority of first-type CSI in a lower-priority sub-configuration is higher than a priority of a lower-priority CSI type in a higher-priority sub-configuration.

In some embodiments, for a same CSI type, a priority of the CSI type in a higher-priority sub-configuration is higher than a priority of the CSI type in a lower-priority sub-configuration.

As used herein, "low priority" and "high priority" may respectively indicate "lower priority" and "higher priority".

In some embodiments, a priority of second-type content in a second-type sub-configuration is lower than a priority of first-type content in the second-type sub-configuration.

In some embodiments, a priority of second-type content in a second-type sub-configuration is lower than a priority of first-type content in a third-type sub-configuration.

In some embodiments, a priority of second-type content in a second-type sub-configuration is lower than a priority of fourth-type content in a first-type sub-configuration.

In some embodiments, a priority of first-type content in a second-type sub-configuration is lower than a priority of fourth-type content in a first-type sub-configuration.

In some embodiments, a priority of second-type content in a second-type sub-configuration is lower than a priority of first-type content in the second-type sub-configuration, and the priority of first-type content in the second-type sub-configuration is lower than a priority of fourth-type content in a first-type sub-configuration.

In some embodiments, a priority of second-type content in a second-type sub-configuration is lower than a priority of fourth-type content in a first-type sub-configuration, and the priority of fourth-type content in the first-type sub-configuration is lower than a priority of first-type content in the second-type sub-configuration.

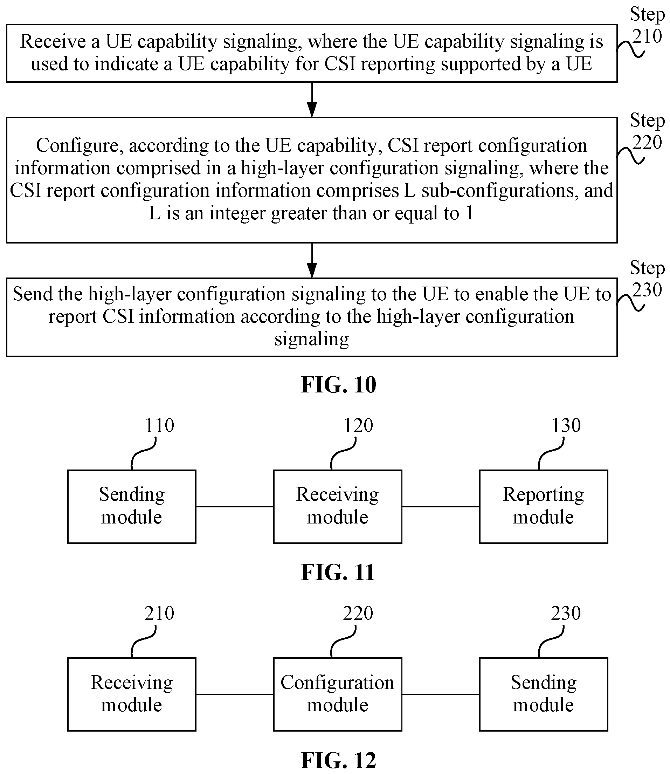

FIG. 10 is another flowchart of a channel state information (CSI) reporting method according to an embodiment of the present disclosure. As shown in FIG. 10, the method is applied to a base station and includes step 210 to step 230.

In step 210, a UE capability signaling is received, where the UE capability signaling indicates UE-reported supported UE capabilities.

In the present embodiment, the base station may receive the UE capability signaling sent by the UE, so as to determine the UE-reported supported UE capabilities based on the UE capability signaling.

The UE capability may include one or more of the following:
A UE capability indicates whether the UE reports support for configuring L sub-configurations in one CSI report configuration, where the L sub-configurations are configured with parameters of multiple types.
A UE capability indicates whether the UE reports support for reporting N sets of CSI information in one CSI report.
A UE capability indicates a maximum value of L reported by the UE, where candidate values of the maximum value of L include at least one of the following: {2, 3, 4}.
A UE capability indicates whether the UE reports support for overhead-saving reporting of multiple sets of CSI information.
A UE capability indicates whether the UE reports support for CSI processing unit (CPU: CSI processing unit) computation for reporting multiple sets of CSI information.
A UE capability indicates whether the UE reports support for CPU computation for overhead-saving reporting of multiple sets of CSI information.
A UE capability indicates CSI types supported by the UE for reporting multiple sets of CSI information, where the CSI types include at least one of the following: first-type CSI, second-type CSI, sub-block 1 of third-type CSI, or sub-block 2 of third-type CSI.
A UE capability indicates a priority type supported by the UE.
A UE capability indicates whether the UE reports support for configuring parameters of multiple types in one sub-configuration of one CSI report configuration.
A UE capability indicates whether the UE reports support for configuring parameters of different types in different sub-configurations of one CSI report configuration.
A UE capability indicates whether the UE reports support for triggering N sub-configurations among L sub-configurations through downlink control information (DCI) or a media access control (MAC) control element (CE).

In step 220, CSI report configuration information included in a high-layer configuration signaling is configured according to the UE capability, where the CSI report configuration information includes L sub-configurations, and L is an integer greater than or equal to 1.

In the present embodiment, the high-layer configuration signaling is configured according to the UE capability and is sent to the UE. The high-layer configuration signaling may include CSI report configuration information. One CSI report may include at least one of the following: a CSI-RS resource indicator (CRI), a rank indicator (RI), a layer indicator (LI), a precoding matrix indicator (PMI), or a channel quality indicator (CQI).

In step 230, the high-layer configuration signaling is sent to the UE, so that CSI reporting is performed by the UE according to the high-layer configuration signaling.

In the present embodiment, the high-layer configuration signaling may be sent to the UE, so that the UE performs CSI reporting according to the L sub-configurations included in the high-layer configuration signaling. The CSI may include multiple sets of CSI information. One set of CSI information is associated with one sub-configuration. A content of the CSI information may be measured according to a respective sub-configuration.

In the present embodiment, the high-layer configuration signaling is configured according to the UE capability, so that the UE reports multiple sets of CSI information, thereby enabling the base station to configure a corresponding configuration for the UE based on the multiple sets of CSI information and to effectively reduce energy consumption of the base station. Furthermore, the UE capability supports joint configuration, enabling the base station to implement both spatial-domain adjustment and power adjustment. In an embodiment, the UE capability includes one or more of a first UE capability, a second UE capability, a third UE capability, a fourth UE capability, and a fifth UE capability.

The first UE capability is used to indicate whether the UE supports configuring the L sub-configurations in one CSI report configuration. The L sub-configurations are configured with a first-type parameter or a third-type parameter. The first-type parameter includes a rank indication restriction, a codebook subset restriction, and a port subset indication. The third-type parameter includes a resource list.

The second UE capability is used to indicate whether the UE supports configuring the L sub-configurations in one CSI report configuration. The L sub-configurations are configured with a second-type parameter, and the second-type parameter includes one of the following: one or more power offsets, one or more power deviation values, or one or more power offset indices.

The third UE capability is used to indicate whether the UE supports configuring parameters of multiple types in one sub-configuration of one CSI report configuration.

The fourth UE capability is used to indicate whether the UE supports configuring parameters of different types in different sub-configurations of one CSI report configuration.

The fifth UE capability is used to indicate whether the UE supports triggering N sub-configurations among the L sub-configurations through DCI or a MAC CE, where N is an integer greater than or equal to 1 and less than or equal to L.

In the present embodiment, the fifth UE capability includes one or more of the following:
whether the UE reports support for triggering N sub-configurations among the L sub-configurations through DCI or a MAC CE;
whether the UE reports support for triggering N sub-configurations among the L sub-configurations through DCI;
whether the UE reports support for triggering N sub-configurations among the L sub-configurations in an SPS CSI report configuration through a MAC CE;
whether the UE reports support for triggering N sub-configurations among the L sub-configurations in an aperiodic CSI report configuration through DCI;
whether the UE reports support for triggering N sub-configurations among the L sub-configurations in an SPS CSI report configuration through DCI or a MAC CE;
whether the UE reports support for triggering N sub-configurations among the L sub-configurations in an SPS CSI report configuration through DCI; or
whether the UE reports support for triggering N sub-configurations among the L sub-configurations in a periodic CSI report configuration through DCI or a MAC CE.

In an embodiment, in response to the UE reporting support for the first UE capability and the second UE capability, or in response to the UE reporting support for the third UE capability, the L sub-configurations satisfy one of the following:

Each sub-configuration among the L sub-configurations is only configured with the first-type parameter.

Each sub-configuration among the L sub-configurations is only configured with the second-type parameter.

Each sub-configuration among the L sub-configurations is only configured with the third-type parameter.

Each sub-configuration among the L sub-configurations is only configured with parameters of one type, where the parameters of one type include the first-type parameter, the second-type parameter, or the third-type parameter, and different sub-configurations are configured with parameters of different types.

Each sub-configuration among the L sub-configurations is configured with parameters of one type or parameters of two types, where the parameters of two types include the first-type parameter and the second-type parameter, or include the second-type parameter and the third-type parameter.

In an embodiment, in response to the UE reporting support for the first UE capability, the second UE capability, and the fourth UE capability, one sub-configuration among the L sub-configurations satisfies one of the following:

The one sub-configuration is configured with the rank indication restriction, the codebook subset restriction, and the port subset indication.

The one sub-configuration is configured with a resource list.

The one sub-configuration is configured with the first-type parameter and the second-type parameter.

The one sub-configuration is configured with the second-type parameter and the third-type parameter.

The one sub-configuration is configured with the second-type parameter.

In an embodiment, in response to the UE reporting non-support for the third UE capability or reporting non-support for the fourth UE capability, or in response to the UE not reporting the third UE capability or not reporting the fourth UE capability, all sub-configurations in the L sub-configurations are configured with parameters of a same type.

In an embodiment, in response to the UE supporting, for CSI resporting, at least one of the third UE capability, the fourth UE capability, or the fifth UE capability, and N sub-configurations among the L sub-configurations being triggered through DCI or a MAC CE, the N sub-configurations satisfy one of the following:

The N sub-configurations are configured with parameters of a same type.

In response to the N sub-configurations being configured with parameters of different types, the N sub-configurations do not include both a sub-configuration configured with the rank indication restriction, the codebook subset restriction, and the port subset indication and a sub-configuration configured with a resource list.

In an embodiment, reporting the CSI information includes discarding a part of CSI in a CSI report according to sub-configuration information and CSI type information.

In an embodiment, the CSI includes N sets of CSI information. The N sets of CSI information are associated with the N sub-configurations. N is an integer greater than or equal to 1 and less than or equal to 1. Each set of the N sets of CSI information is divided into three portions: the first-type CSI, the second-type CSI, and the third-type CSI.

The third-type CSI is divided into a first sub-block (i.e., sub-block 1) of the third-type CSI and a second sub-block (i.e., sub-block 2) of the third-type CSI according to odd-numbered sub-bands and even-numbered sub-bands, respectively.

In one embodiment, discarding the part of CSI in the CSI report according to the sub-configuration information and the CSI type information includes discarding a part of second-type contents in second-type sub-configurations, and the part of the second-type contents in the second-type sub-configurations is discarded in one of the following orders:
discarding according to a priority order of the second-type sub-configurations, and, for each second-type sub-configuration, discarding according to a priority order of the second-type contents; or
discarding according to a priority order of the second-type contents, and, for each second-type content, discarding according to a priority order of the second-type sub-configurations.

The second-type sub-configurations comprise any combination of sub-configurations with different priorities, and the second-type contents comprise any combination of CSI of multiple types.

In one embodiment, discarding the part of CSI in the CSI report according to the sub-configuration information and the CSI type information includes discarding a part of first-type contents in second-type sub-configurations, and the part of the first-type contents in the second-type sub-configurations is discarded in one of the following orders:
discarding according to a priority order of the second-type sub-configurations, and, for each second-type sub-configuration, discarding according to a priority order of the first-type contents;
discarding according to a priority order of the first-type contents, and, for each first-type content, discarding according to a priority order of the second-type sub-configurations; or
discarding according to a priority order of the first-type contents, wherein all second-type sub-configurations corresponding to each first-type content have a same priority.

The second-type sub-configurations comprise any combination of sub-configurations with different priorities, and the first-type contents comprise any combination of CSI of multiple types.

In one embodiment, discarding the part of CSI in the CSI report according to the sub-configuration information and the CSI type information includes discarding a part of fourth-type contents in first-type sub-configurations, and the part of the fourth-type contents in the first-type sub-configurations is discarded in one of the following orders:
discarding according to a priority order of the first-type sub-configurations, and, for each first-type sub-configuration, discarding according to a priority order of the fourth-type contents;
discarding according to a priority order of the first-type sub-configurations, wherein all fourth-type contents in each first-type sub-configuration have a same priority order;
discarding according to a priority order of the fourth-type contents, and, for each fourth-type content, discarding according to a priority order of the first-type sub-configurations;
discarding according to a priority order of the fourth-type contents, wherein all first-type sub-configurations corresponding to each fourth-type content have a same priority order; or
discarding the fourth-type contents in the first-type sub-configurations.

The first-type sub-configurations include any combination of different sub-configurations, and the fourth-type contents include any combination of CSI of multiple types.

The above embodiments may be combined arbitrarily.

The embodiments of the present disclosure further provide a CSI reporting apparatus. FIG. 11 is a schematic structural diagram of a CSI reporting apparatus according to an embodiment of the present disclosure. As shown in FIG. 11, the CSI reporting apparatus may be configured in a UE, and includes a sending module 110, a receiving module 120, and a reporting module 130.

The sending module 110 is configured to send a UE capability signaling. The UE capability signaling is used to indicate a UE capability for CSI reporting supported by the UE.

The receiving module 120 is configured to receive a high-layer configuration signaling. The high-layer configuration signaling includes CSI report configuration information, the CSI report configuration information includes L sub-configurations, L is an integer greater than or equal to 1, and the CSI report configuration information is configured based on the UE capability.

The reporting module 130 is configured to report CSI information according to the high-layer configuration signaling.

According to the CSI reporting apparatus in the present embodiment, the UE is designed with a high-level UE capability. The high-level UE capability enables the UE to support reporting multiple sets of CSI information, thereby effectively saving energy consumption of the base station. Furthermore, the UE supports the joint configuration, enabling the base station to implement both the spatial domain adjustment and the power adjustment.

In an embodiment, the UE capability includes one or more of a first UE capability, a second UE capability, a third UE capability, a fourth UE capability, and a fifth UE capability.

The first UE capability is used to indicate whether the UE supports configuring the L sub-configurations in one CSI report configuration. The L sub-configurations are configured with a first-type parameter or a third-type parameter. The first-type parameter includes a rank indication restriction, a codebook subset restriction, and a port subset indication. The third-type parameter includes a resource list.

The second UE capability is used to indicate whether the UE supports configuring the L sub-configurations in one CSI report configuration. The L sub-configurations are configured with a second-type parameter, and the second-type parameter includes one of the following: one or more power offsets, one or more power deviation values, or one or more power offset indices.

The third UE capability is used to indicate whether the UE supports configuring parameters of multiple types in one sub-configuration of one CSI report configuration.

The fourth UE capability is used to indicate whether the UE supports configuring parameters of different types in different sub-configurations of one CSI report configuration.

The fifth UE capability is used to indicate whether the UE supports triggering N sub-configurations from the L sub-configurations through DCI or a MAC CE, where N is an integer greater than or equal to 1 and less than or equal to L.

The fifth UE capability includes one or more of the following:
whether the UE reports support for triggering N sub-configurations among the L sub-configurations through DCI or a MAC CE;
whether the UE reports support for triggering N sub-configurations among the L sub-configurations through DCI;
whether the UE reports support for triggering N sub-configurations among the L sub-configurations in an SPS CSI report configuration through a MAC CE;
whether the UE reports support for triggering N sub-configurations among the L sub-configurations in an aperiodic CSI report configuration through DCI;
whether the UE reports support for triggering N sub-configurations among the L sub-configurations in an SPS CSI report configuration through DCI or a MAC CE;
whether the UE reports support for triggering N sub-configurations among the L sub-configurations in an SPS CSI report configuration through DCI; or
whether the UE reports support for triggering N sub-configurations among the L sub-configurations in a periodic CSI report configuration through DCI or a MAC CE.

In an embodiment, in response to the UE reporting support for the first UE capability and the second UE capability, or in response to the UE reporting support for the third UE capability, the L sub-configurations satisfy one of the following:
Each sub-configuration among the L sub-configurations is only configured with the first-type parameter.
Each sub-configuration among the L sub-configurations is only configured with the second-type parameter.
Each sub-configuration among the L sub-configurations is only configured with the third-type parameter.
Each sub-configuration among the L sub-configurations is only configured with parameters of one type, where the parameters of one type include the first-type parameter, the second-type parameter, or the third-type parameter, and different sub-configurations are configured with parameters of different types.
Each sub-configuration among the L sub-configurations is configured with parameters of one type or parameters of two types, where the parameters of two types include the first-type parameter and the second-type parameter, or include the second-type parameter and the third-type parameter.

In an embodiment, in response to the UE reporting support for the first UE capability, the second UE capability, and the fourth UE capability, one sub-configuration among the L sub-configurations satisfies one of the following:

The one sub-configuration is configured with the rank indication restriction, the codebook subset restriction, and the port subset indication.

The one sub-configuration is configured with a resource list.

The one sub-configuration is configured with the first-type parameter and the second-type parameter.

The one sub-configuration is configured with the second-type parameter and the third-type parameter.

The one sub-configuration is configured with the second-type parameter.

In an embodiment, in response to the UE reporting non-support for the third UE capability or reporting non-support for the fourth UE capability, or in response to the UE not reporting the third UE capability or not reporting the fourth UE capability, all sub-configurations in the L sub-configurations are configured with parameters of a same type.

In an embodiment, in response to the UE supporting, for CSI resporting, at least one of the third UE capability, the fourth UE capability, or the fifth UE capability, and N sub-configurations among the L sub-configurations being triggered through DCI or a MAC CE, the N sub-configurations satisfy one of the following:

The N sub-configurations are configured with parameters of a same type.

In response to the N sub-configurations being configured with parameters of different types, the N sub-configurations do not include both a sub-configuration configured with the rank indication restriction, the codebook subset restriction, and the port subset indication and a sub-configuration configured with a resource list.

In an embodiment, reporting the CSI information includes discarding a part of CSI in a CSI report according to sub-configuration information and CSI type information.

In an embodiment, the CSI includes N sets of CSI information. The N sets of CSI information are associated with the N sub-configurations. N is an integer greater than or equal to 1 and less than or equal to L. Each set of the N sets of CSI information is divided into three portions: the first-type CSI, the second-type CSI, and the third-type CSI.

The third-type CSI is divided into a first sub-block (i.e., sub-block 1) of the third-type CSI and a second sub-block (i.e., sub-block 2) of the third-type CSI according to odd-numbered sub-bands and even-numbered sub-bands, respectively.

In one embodiment, discarding the part of CSI in the CSI report according to the sub-configuration information and the CSI type information includes discarding a part of second-type contents in second-type sub-configurations, and the part of the second-type contents in the second-type sub-configurations is discarded in one of the following orders:
discarding according to a priority order of the second-type sub-configurations, and, for each second-type sub-configuration, discarding according to a priority order of the second-type contents; or
discarding according to a priority order of the second-type contents, and, for each second-type content, discarding according to a priority order of the second-type sub-configurations.

The second-type sub-configurations comprise any combination of sub-configurations with different priorities, and the second-type contents comprise any combination of CSI of multiple types.

In one embodiment, discarding the part of CSI in the CSI report according to the sub-configuration information and the CSI type information includes discarding a part of first-type contents in second-type sub-configurations, and the part of the first-type contents in the second-type sub-configurations is discarded in one of the following orders:
discarding according to a priority order of the second-type sub-configurations, and, for each second-type sub-configuration, discarding according to a priority order of the first-type contents;
discarding according to a priority order of the first-type contents, and, for each first-type content, discarding according to a priority order of the second-type sub-configurations; or
discarding according to a priority order of the first-type contents, wherein all second-type sub-configurations corresponding to each first-type content have a same priority.

The second-type sub-configurations comprise any combination of sub-configurations with different priorities, and the first-type contents comprise any combination of CSI of multiple types.

In one embodiment, discarding the part of CSI in the CSI report according to the sub-configuration information and the CSI type information includes discarding a part of fourth-type contents in first-type sub-configurations, and the part of the fourth-type contents in the first-type sub-configurations is discarded in one of the following orders:
discarding according to a priority order of the first-type sub-configurations, and, for each first-type sub-configuration, discarding according to a priority order of the fourth-type contents;
discarding according to a priority order of the first-type sub-configurations, wherein all fourth-type contents in each first-type sub-configuration have a same priority order;
discarding according to a priority order of the fourth-type contents, and, for each fourth-type content, discarding according to a priority order of the first-type sub-configurations;
discarding according to a priority order of the fourth-type contents, wherein all first-type sub-configurations corresponding to each fourth-type content have a same priority order; or
discarding the fourth-type contents in the first-type sub-configurations.

The first-type sub-configurations include any combination of different sub-configurations, and the fourth-type contents include any combination of CSI of multiple types.

The CSI reporting apparatus provided in the present embodiment and the CSI reporting method provided in the preceding embodiments belong to the same concept. For technical details not described in detail in the present embodiment, reference may be made to any one of the preceding embodiments, and the present embodiment has the same effect as the CSI reporting method.

The embodiments of the present disclosure further provide a CSI reporting apparatus. FIG. 12 is another schematic structural diagram of a CSI reporting apparatus according to an embodiment of the present disclosure. As shown in FIG. 12, the CSI reporting apparatus may be configured in a base station, and includes a receiving module 210, a configuration module 220, and a sending module 230.

The receiving module 210 is configured to receive a UE capability signaling. The UE capability signaling is used to indicate a UE capability for CSI reporting supported by a UE.

The configuration module 220 is configured to configure, according to the UE capability, CSI report configuration information included in a high-layer configuration signaling. The CSI report configuration information includes L sub-configurations, and L is an integer greater than or equal to 1.

The sending module 230 is configured to send the high-layer configuration signaling to the UE to enable the UE to report CSI information according to the high-layer configuration signaling.

According to the CSI reporting apparatus in the present embodiment, the base station may configure the high-layer configuration signaling according to the UE capability to enable the UE to report multiple sets of CSI information, so that the base station can configure the corresponding configuration for the UE according to the multiple sets of CSI information, thereby effectively saving the energy consumption of the base station. Furthermore, the UE supports the joint configuration, enabling the base station to implement both the spatial domain adjustment and the power adjustment.

In an embodiment, the UE capability includes one or more of a first UE capability, a second UE capability, a third UE capability, a fourth UE capability, and a fifth UE capability.

The first UE capability is used to indicate whether the UE supports configuring the L sub-configurations in one CSI report configuration. The L sub-configurations are configured with a first-type parameter or a third-type parameter. The first-type parameter includes a rank indication restriction, a codebook subset restriction, and a port subset indication. The third-type parameter includes a resource list.

The second UE capability is used to indicate whether the UE supports configuring the L sub-configurations in one CSI report configuration. The L sub-configurations are configured with a second-type parameter, and the second-type parameter includes one of the following: one or more power offsets, one or more power deviation values, or one or more power offset indices.

The third UE capability is used to indicate whether the UE supports configuring parameters of multiple types in one sub-configuration of one CSI report configuration.

The fourth UE capability is used to indicate whether the UE supports configuring parameters of different types in different sub-configurations of one CSI report configuration.

The fifth UE capability is used to indicate whether the UE supports triggering N sub-configurations among the L sub-configurations through DCI or a MAC CE, where N is an integer greater than or equal to 1 and less than or equal to L.

The fifth UE capability includes one or more of the following:
whether the UE reports support for triggering N sub-configurations among the L sub-configurations through DCI or a MAC CE;
whether the UE reports support for triggering N sub-configurations among the L sub-configurations through DCI;
whether the UE reports support for triggering N sub-configurations among the L sub-configurations in an SPS CSI report configuration through a MAC CE;
whether the UE reports support for triggering N sub-configurations among the L sub-configurations in an aperiodic CSI report configuration through DCI;
whether the UE reports support for triggering N sub-configurations among the L sub-configurations in an SPS CSI report configuration through DCI or a MAC CE;
whether the UE reports support for triggering N sub-configurations among the L sub-configurations in an SPS CSI report configuration through DCI; or
whether the UE reports support for triggering N sub-configurations among the L sub-configurations in a periodic CSI report configuration through DCI or a MAC CE.

In an embodiment, in response to the UE reporting support for the first UE capability and the second UE capability, or in response to the UE reporting support for the third UE capability, the L sub-configurations satisfy one of the following:
Each sub-configuration among the L sub-configurations is only configured with the first-type parameter.
Each sub-configuration among the L sub-configurations is only configured with the second-type parameter.
Each sub-configuration among the L sub-configurations is only configured with the third-type parameter.
Each sub-configuration among the L sub-configurations is only configured with parameters of one type, where the parameters of one type include the first-type parameter, the second-type parameter, or the third-type parameter, and different sub-configurations are configured with parameters of different types.
Each sub-configuration among the L sub-configurations is configured with parameters of one type or parameters of two types, where the parameters of two types include the first-type parameter and the second-type parameter, or include the second-type parameter and the third-type parameter.

In an embodiment, in response to the UE reporting support for the first UE capability, the second UE capability, and the fourth UE capability, one sub-configuration among the L sub-configurations satisfies one of the following:

The one sub-configuration is configured with the rank indication restriction, the codebook subset restriction, and the port subset indication.

The one sub-configuration is configured with a resource list.

The one sub-configuration is configured with the first-type parameter and the second-type parameter.

The one sub-configuration is configured with the second-type parameter and the third-type parameter.

The one sub-configuration is configured with the second-type parameter.

In an embodiment, in response to the UE reporting non-support for the third UE capability or reporting non-support for the fourth UE capability, or in response to the UE not reporting the third UE capability or not reporting the fourth UE capability, all sub-configurations in the L sub-configurations are configured with parameters of a same type.

In an embodiment, in response to the UE supporting, for CSI resporting, at least one of the third UE capability, the fourth UE capability, or the fifth UE capability, and N sub-configurations among the L sub-configurations being triggered through DCI or a MAC CE, the N sub-configurations satisfy one of the following:

The N sub-configurations are configured with parameters of a same type.

In response to the N sub-configurations being configured with parameters of different types, the N sub-configurations do not include both a sub-configuration configured with the rank indication restriction, the codebook subset restriction, and the port subset indication and a sub-configuration configured with a resource list.

In an embodiment, reporting the CSI information includes discarding a part of CSI in a CSI report according to sub-configuration information and CSI type information.

In an embodiment, the CSI includes N sets of CSI information. The N sets of CSI information are associated with the N sub-configurations. N is an integer greater than or equal to 1 and less than or equal to L. Each set of the N sets of CSI information is divided into three portions: the first-type CSI, the second-type CSI, and the third-type CSI.

The third-type CSI is divided into a first sub-block (i.e., sub-block 1) of the third-type CSI and a second sub-block (i.e., sub-block 2) of the third-type CSI according to odd-numbered sub-bands and even-numbered sub-bands, respectively.

In one embodiment, discarding the part of CSI in the CSI report according to the sub-configuration information and the CSI type information includes discarding a part of second-type contents in second-type sub-configurations, and the part of the second-type contents in the second-type sub-configurations is discarded in one of the following orders:
discarding according to a priority order of the second-type sub-configurations, and, for each second-type sub-configuration, discarding according to a priority order of the second-type contents; or
discarding according to a priority order of the second-type contents, and, for each second-type content, discarding according to a priority order of the second-type sub-configurations.

The second-type sub-configurations comprise any combination of sub-configurations with different priorities, and the second-type contents comprise any combination of CSI of multiple types.

In one embodiment, discarding the part of CSI in the CSI report according to the sub-configuration information and the CSI type information includes discarding a part of first-type contents in second-type sub-configurations, and the part of the first-type contents in the second-type sub-configurations is discarded in one of the following orders:
discarding according to a priority order of the second-type sub-configurations, and, for each second-type sub-configuration, discarding according to a priority order of the first-type contents;
discarding according to a priority order of the first-type contents, and, for each first-type content, discarding according to a priority order of the second-type sub-configurations; or
discarding according to a priority order of the first-type contents, wherein all second-type sub-configurations corresponding to each first-type content have a same priority.

The second-type sub-configurations comprise any combination of sub-configurations with different priorities, and the first-type contents comprise any combination of CSI of multiple types.

In one embodiment, discarding the part of CSI in the CSI report according to the sub-configuration information and the CSI type information includes discarding a part of fourth-type contents in first-type sub-configurations, and the part of the fourth-type contents in the first-type sub-configurations is discarded in one of the following orders:
discarding according to a priority order of the first-type sub-configurations, and, for each first-type sub-configuration, discarding according to a priority order of the fourth-type contents;
discarding according to a priority order of the first-type sub-configurations, wherein all fourth-type contents in each first-type sub-configuration have a same priority order;
discarding according to a priority order of the fourth-type contents, and, for each fourth-type content, discarding according to a priority order of the first-type sub-configurations;
discarding according to a priority order of the fourth-type contents, wherein all first-type sub-configurations corresponding to each fourth-type content have a same priority order; or
discarding the fourth-type contents in the first-type sub-configurations.

The first-type sub-configurations include any combination of different sub-configurations, and the fourth-type contents include any combination of CSI of multiple types.

The CSI reporting apparatus provided in the present embodiment and the CSI reporting method provided in the preceding embodiments belong to the same concept. For technical details not described in detail in the present embodiment, reference may be made to any one of the preceding embodiments, and the present embodiment has the same effect as the CSI reporting method.

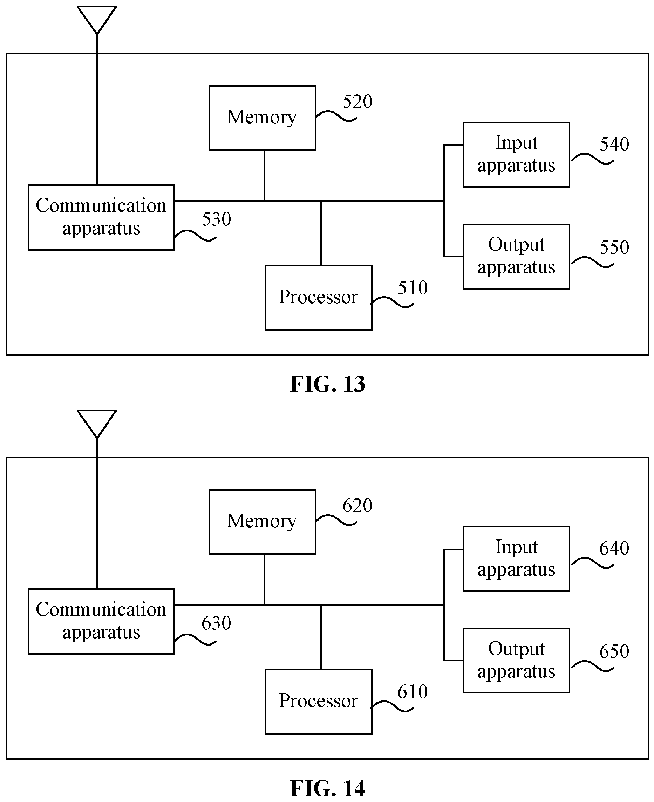

The embodiments of the present disclosure further provide a UE, and FIG. 13 is a schematic diagram of a hardware structure of a UE according to an embodiment of the present disclosure. As shown in FIG. 13, the UE according to the present disclosure includes a memory 520, a processor 510, and a computer program stored in the memory and executable on the processor. The processor 510, when executing the program, implements the above CSI reporting method.

The UE may further include the memory 520. The UE may include one or more processors 510. In FIG. 13, one processor 510 is taken as an example. The memory 520 is used to store one or more programs. One or more programs are executed by one or more processors 510, causing one or more processors 510 to implement the CSI reporting method as described in the embodiments of the present disclosure.

The UE further includes a communication apparatus 530, an input apparatus 540, and an output apparatus 550.

The processor 510, the memory 520, the communication apparatus 530, the input apparatus 540 and the output apparatus 550 in the UE may be connected via a bus or other means. In FIG. 13, a connection via a bus is taken as an example.

The input apparatus 540 may be used to receive input digital or character information and generate a key signal input related to a user setting and function control of the UE. The output apparatus 550 may include a display screen or other display device.

The communication apparatus 530 may include a receiver and a transmitter. The communication apparatus 530 is configured to perform information transmission and reception communication under the control of the processor 510.

The memory 520, as a computer-readable storage medium, may be configured to store software programs, computer-executable programs, and modules, such as program instructions/modules (for example, the sending module 110, the receiving module 120 and the reporting module 130 in the CSI reporting apparatus) corresponding to the CSI reporting method in the embodiments of the present disclosure. The memory 520 may include a program storage region and a data storage region. The program storage region may store an operating system and at least one application required for a function. The data storage region may store data created according to the use of the UE, etc. Furthermore, the memory 520 may include a high-speed random access memory, and may further include a non-volatile memory, such as at least one magnetic disk memory, a flash memory, or other non-volatile solid-state memory. In some examples, the memory 520 may further include memories remotely located with respect to the processor 510, and these remote memories may be connected to the UE through a network. Examples of the above networks include, but are not limited to, the Internet, an intranet, a local area network, a mobile communication network, and combinations thereof.

The embodiments of the present disclosure further provide a base station. FIG. 14 is a schematic diagram of a hardware structure of a base station according to an embodiment of the present disclosure. As shown in FIG. 14, the base station according to the present disclosure includes a memory 620, a processor 610, and a computer program stored in the memory and executable on the processor. The processor 610, when executing the program, implements the above CSI reporting method.

The base station may further include the memory 620. The base station may include one or more processors 510. In FIG. 14, one processor 610 is taken as an example. The memory 620 is used to store one or more programs. One or more programs are executed by one or more processors 610, causing one or more processors 510 to implement the CSI reporting method as described in the embodiments of the present disclosure.

The base station further includes a communication apparatus 630, an input apparatus 640 and an output apparatus 650.

The processor 610, the memory 620, the communication apparatus 630, the input apparatus 640 and the output apparatus 650 in the base station may be connected via a bus or other means. In FIG. 14, a connection via a bus is taken as an example.

The input apparatus 640 may be used to receive input digital or character information and generate a key signal input related to a user setting and function control of the UE. The output apparatus 650 may include a display screen or other display device.

The communication apparatus 630 may include a receiver and a transmitter. The communication apparatus 630 is configured to perform information transmission and reception communication under the control of the processor 610.

The memory 620, as a computer-readable storage medium, may be configured to store software programs, computer-executable programs, and modules, such as program instructions/modules (for example, the receiving module 210, the configuration module 220 and the sending module 230 in the CSI reporting apparatus) corresponding to the CSI reporting method in the embodiments of the present disclosure. The memory 620 may include a program storage region and a data storage region. The program storage region may store an operating system and at least one application required for a function. The data storage region may store data created according to the use of the base station, etc. Furthermore, the memory 620 may include a high-speed random access memory, and may further include a non-volatile memory, such as at least one magnetic disk memory, a flash memory, or other non-volatile solid-state memory. In some examples, the memory 620 may further include memories remotely located with respect to the processor 610, and these remote memories may be connected to the base station through a network. Examples of the above networks include, but are not limited to, the Internet, an intranet, a local area network, a mobile communication network, and combinations thereof.

The embodiments of the present disclosure further provide a storage medium. A computer program is stored in the storage medium, and the computer program, when executed by a processor, is configured to implement the CSI reporting method described in any embodiment of the present disclosure.

Optionally, the CSI reporting method, applied to a UE, includes the following: sending a UE capability signaling, where the UE capability signaling is used to indicate a UE capability for CSI reporting supported by the UE; receiving a high-layer configuration signaling, where the high-layer configuration signaling includes CSI report configuration information, the CSI report configuration information includes L sub-configurations, L is an integer greater than or equal to 1, and the CSI report configuration information is configured based on the UE capability; and reporting CSI information according to the high-layer configuration signaling.

Optionally, the CSI reporting method, applied to a base station, includes the following: a UE capability signaling is received, where the UE capability signaling is used to indicate a UE capability for CSI reporting supported by a UE; CSI report configuration information included in a high-layer configuration signaling is configured according to the UE capability, where the CSI report configuration information includes L sub-configurations, and L is an integer greater than or equal to 1; and sending the high-layer configuration signaling the UE to enable the UE to report CSI information according to the high-layer configuration signaling.

In the embodiment of the present disclosure, the computer storage medium may include any combination of one or more computer-readable media. A computer-readable medium may be a computer-readable signal medium or a computer-readable storage medium. The computer-readable storage medium may include, for example, but is not limited to, an electrical, magnetic, optical, electromagnetic, infrared, or semiconductor system, device, or apparatus, or any combination thereof. More specific examples of computer-readable storage media include (without limitation) electrical connections having one or more wires, portable computer disks, hard disks, random access memory (RAM), read-only memory (ROM), erasable programmable read only memory (EEPROM), flash memory, optical fibers, portable compact disc read only memory (CD-ROM), optical storage devices, magnetic storage devices, or any suitable combination thereof. A computer-readable storage medium may be any tangible medium containing or storing a program, and the program may be used by, or in conjunction with, an instruction execution system, device, or apparatus.

The computer-readable signal medium may include a data signal propagated in baseband or as part of a carrier wave, and the data signal carries computer-readable program code. The propagated data signal may take various forms, including but not limited to an electromagnetic signal, an optical signal, or any suitable combination thereof. The computer-readable signal medium may also be any computer-readable medium other than the computer-readable storage medium. The computer-readable medium may send, propagate, or transmit the program for use by or in conjunction with the instruction execution system, device, or equipment.

The program code included in the computer-readable medium may be transmitted through any appropriate medium, including but not limited to wireless, wire, optical cable, radio frequency (RF), etc., or any appropriate combination thereof.

The computer program code for performing that operation of the present disclosure may be written in one or more programming languages or a combination of multiple programming languages, including object-oriented programming languages, such as Java, Smalltalk, and C++, as well as conventional procedural programming languages, such as "C" language or similar programming languages. The program code may be entirely executed on the user's computer, partially executed on the user's computer, executed as a standalone software package, partially executed on the user's computer and partially executed on a remote computer, or entirely executed on a remote computer or server. In a case involving a remote computer, the remote computer may be connected to a user computer through any type of network, including a local area network (LAN) or a wide area network (WAN), or may be connected to an external computer (for example, through the Internet using an Internet service provider).

The foregoing description merely shows the illustrative embodiments of the present disclosure, and is not intended to limit the scope of the present disclosure.

It is to be understood by those skilled in the art that the term UE covers any suitable type of wireless user equipment, for example, a mobile phone, a portable data processing apparatus, a portable web browser, or a vehicle-mounted mobile station.

In general, multiple embodiments of the present disclosure may be implemented in hardware or special-purpose circuits, software, logic, or any combination thereof. For example, some aspects may be implemented in hardware while other aspects may be implemented in firmware or software that may be executed by a controller, a microprocessor, or another computing apparatus, though the present disclosure is not limited thereto.

The embodiments of the present disclosure may be implemented by computer program instructions executed by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present disclosure may represent program steps, may represent interconnected logic circuits, modules, and functions or may represent a combination of program steps with logic circuits, modules, and functions. A computer program may be stored in a memory. The memory may be of any type suitable for a local technical environment and may be implemented using any suitable data storage technology. The memory may be, for example, but not limited to, a read-only memory (ROM), a random-access memory (RAM), an optical storage apparatus and system (digital video disc (DVD) or compact disc (CD)) or the like. Computer-readable media may include non-transitory storage media. The data processor may be of any type suitable for the local technical environment, such as, but not limited to, a general-purpose computer, a special-purpose computer, a microprocessor, a digital signal processor (DSP), an application specific integrated circuit (ASIC), a field-programmable gate array (FPGA) and a processor based on a multi-core processor architecture.

By way of exemplary and non-limiting examples, a detailed description of the exemplary embodiments of the present disclosure has been provided above. However, various modifications and adaptations to the above embodiments are obvious to those skilled in the art in view of the drawings and the claims, without departing from the scope of the present disclosure. Accordingly, the proper scope of the present disclosure is determined according to the claims.

## Claims

1. A channel state information, CSI, reporting method, applied to a user equipment, UE, comprising:
sending a UE capability signaling, wherein the UE capability signaling is used to indicate a UE capability for CSI reporting supported by the UE;
receiving a high-layer configuration signaling, wherein the high-layer configuration signaling comprises CSI report configuration information, the CSI report configuration information comprises L sub-configurations, L is an integer greater than or equal to 1, and the CSI report configuration information is configured based on the UE capability; and
reporting CSI information according to the high-layer configuration signaling.

2. The CSI reporting method according to claim 1, wherein the UE capability comprises at least one of the following:
a first UE capability, wherein the first UE capability is used to indicate whether the UE supports configuring the L sub-configurations in one CSI report configuration, the L sub-configurations are configured with a first-type parameter or a third-type parameter, the first-type parameter comprises a rank indication restriction, a codebook subset restriction and a port subset indication, and the third-type parameter comprises a resource list;
a second UE capability, wherein the second UE capability is used to indicate whether the UE supports configuring the L sub-configurations in one CSI report configuration, the L sub-configurations are configured with a second-type parameter, and the second-type parameter comprises one of the following: at least one power offset, at least one power deviation value, or at least one power offset index;
a third UE capability, wherein the third UE capability is used to indicate whether the UE supports configuring parameters of a plurality of types in one sub-configuration of one CSI report configuration;
a fourth UE capability, wherein the fourth UE capability is used to indicate whether the UE supports configuring parameters of different types in different sub-configurations of one CSI report configuration; or
a fifth UE capability, wherein the fifth UE capability is used to indicate whether the UE supports triggering N sub-configurations from the L sub-configurations through downlink control information or a media access control, MAC, control element, wherein N is an integer greater than or equal to 1 and less than or equal to L.

3. The CSI reporting method according to claim 2, wherein in response to the UE supporting the first UE capability and the second UE capability, or in response to the UE supporting the third UE capability, the L sub-configurations satisfy one of the following:
each sub-configuration among the L sub-configurations is only configured with the first-type parameter;
each sub-configuration among the L sub-configurations is only configured with the second-type parameter;
each sub-configuration among the L sub-configurations is only configured with the third-type parameter;
each sub-configuration among the L sub-configurations is only configured with parameters of one type, wherein the parameters of one type comprise the first-type parameter, the second-type parameter or the third-type parameter, and different sub-configurations are configured with parameters of different types; or
each sub-configuration among the L sub-configurations is configured with parameters of one type or parameters of two types, wherein the parameters of two types comprise the first-type parameter and the second-type parameter, or comprise the second-type parameter and the third-type parameter.

4. The CSI reporting method according to claim 2, wherein in response to the UE supporting the first UE capability, the second UE capability and the fourth UE capability, one sub-configuration among the L sub-configurations satisfies one of the following:
the one sub-configuration is configured with the rank indication restriction, the codebook subset restriction and the port subset indication;
the one sub-configuration is configured with the resource list;
the one sub-configuration is configured with the first-type parameter and the second-type parameter;
the one sub-configuration is configured with the second-type parameter and the third-type parameter; or
the one sub-configuration is configured with the second-type parameter.

5. The CSI reporting method according to claim 2, wherein in response to the UE reporting non-support for the third UE capability or reporting non-support for the fourth UE capability, or in response to the UE not reporting the third UE capability or the fourth UE capability, all sub-configurations in the L sub-configurations are configured with parameters of a same type.

6. The CSI reporting method according to claim 2, wherein in response to the UE supporting, for CSI resporting, at least one of the third UE capability, the fourth UE capability, or the fifth UE capability, and the N sub-configurations among the L sub-configurations being triggered through the downlink control information or the MAC control element, the N sub-configurations satisfy one of the following:
the N sub-configurations are configured with parameters of a same type; or
in response to the N sub-configurations being configured with parameters of different types, the N sub-configurations do not comprise both a sub-configuration configured with the rank indication restriction, the codebook subset restriction, or the port subset indication, and a sub-configuration configured with the resource list.

7. The CSI reporting method according to claim 1, wherein reporting the CSI information comprises discarding a part of CSI in a CSI report according to sub-configuration information and CSI type information.

8. The CSI reporting method according to claim 7, wherein the CSI report comprises N sets of CSI information, the N sets of CSI information are associated with N sub-configurations, wherein N is an integer greater than or equal to 1 and less than or equal to L, and each set of the N sets of CSI information is divided into three portions comprising a first-type CSI, a second-type CSI, and a third-type CSI; and
wherein the third-type CSI comprises a first sub-block of the third-type CSI and a second sub-block of the third-type CSI that are divided according to odd-numbered sub-bands and even-numbered sub-bands, respectively.

9. The CSI reporting method according to claim 8, wherein discarding the part of CSI in the CSI report according to the sub-configuration information and the CSI type information comprises discarding a part of second-type contents in second-type sub-configurations, and the part of the second-type contents in the second-type sub-configurations is discarded in one of the following orders:
discarding according to a priority order of the second-type sub-configurations, and, for each second-type sub-configuration, discarding according to a priority order of the second-type contents; or
discarding according to a priority order of the second-type contents, and, for each second-type content, discarding according to a priority order of the second-type sub-configurations;
wherein the second-type sub-configurations comprise any combination of sub-configurations with different priorities, and the second-type contents comprise any combination of CSI of a plurality of types.

10. The CSI reporting method according to claim 8, wherein discarding the part of CSI in the CSI report according to the sub-configuration information and the CSI type information comprises discarding a part of first-type contents in second-type sub-configurations, and the part of the first-type contents in the second-type sub-configurations is discarded in one of the following orders:
discarding according to a priority order of the second-type sub-configurations, and, for each second-type sub-configuration, discarding according to a priority order of the first-type contents;
discarding according to a priority order of the first-type contents, and, for each first-type content, discarding according to a priority order of the second-type sub-configurations; or
discarding according to a priority order of the first-type contents, wherein all second-type sub-configurations corresponding to each first-type content have a same priority;
wherein the second-type sub-configurations comprise any combination of sub-configurations with different priorities, and the first-type contents comprise any combination of CSI of a plurality of types.

11. The CSI reporting method according to claim 8, wherein discarding the part of CSI in the CSI report according to the sub-configuration information and the CSI type information comprises discarding a part of fourth-type contents in first-type sub-configurations, and the part of the fourth-type contents in the first-type sub-configurations is discarded in one of the following orders:
discarding according to a priority order of the first-type sub-configurations, and, for each first-type sub-configuration, discarding according to a priority order of the fourth-type contents;
discarding according to a priority order of the first-type sub-configurations, wherein all fourth-type contents in each first-type sub-configuration have a same priority order;
discarding according to a priority order of the fourth-type contents, and, for each fourth-type content, discarding according to a priority order of the first-type sub-configurations;
discarding according to a priority order of the fourth-type contents, wherein all first-type sub-configurations corresponding to each fourth-type content have a same priority order; or
discarding the fourth-type contents in the first-type sub-configurations;
wherein the first-type sub-configurations comprise any combination of different sub-configurations, and the fourth-type contents comprise any combination of CSI of a plurality of types.

12. A channel state information, CSI, reporting method, applied to a base station, comprising:
receiving a user equipment, UE, capability signaling, wherein the UE capability signaling is used to indicate a UE capability for CSI reporting supported by a UE;
configuring, according to the UE capability, CSI report configuration information comprised in a high-layer configuration signaling, wherein the CSI report configuration information comprises L sub-configurations, and L is an integer greater than or equal to 1; and
sending the high-layer configuration signaling to the UE to enable the UE to report CSI information according to the high-layer configuration signaling.

13. The CSI reporting method according to claim 12, wherein the UE capability comprises at least one of the following:
a first UE capability, wherein the first UE capability is used to indicate whether the UE supports configuring L sub-configurations in one CSI report configuration, the L sub-configurations are configured with a first-type parameter or a third-type parameter, the first-type parameter comprises a rank indication restriction, a codebook subset restriction and a port subset indication port subset indication, and the third-type parameter comprises a resource list;
a second UE capability, wherein the second UE capability is used to indicate whether the UE supports configuring L sub-configurations in one CSI report configuration, the L sub-configurations are configured with a second-type parameter, and the second-type parameter comprises one of the following: at least one power offset, at least one power deviation value, or at least one power offset index;
a third UE capability, wherein the third UE capability is used to indicate whether the UE supports configuring parameters of a plurality of types in one sub-configuration of one CSI report configuration;
a fourth UE capability, wherein the fourth UE capability is used to indicate whether the UE supports configuring parameters of different types in different sub-configurations of one CSI report configuration; or
a fifth UE capability, wherein the fifth UE capability is used to indicate whether the UE supports triggering N sub-configurations among L sub-configurations through downlink control information or a media access control, MAC, control element, wherein N is an integer greater than or equal to 1 and less than or equal to L.

14. The CSI reporting method according to claim 12, wherein during the CSI information reporting, a part of CSI in the CSI report is discarded according to sub-configuration information and CSI type information.

15. A user equipment, UE, comprising: a memory, a processor, and a computer program stored in the memory and executable by the processor, wherein the processor, when executing the computer program, is configured to perform the CSI reporting method according to any one of claims 1 to 11.

16. A base station, comprising a memory, a processor and a computer program stored in the memory and executable by the processor, wherein the processor, when executing the computer program, is configured to implement the CSI reporting method according to any one of claims 12 to 14.

17. A storage medium, storing a computer program, wherein the computer program, when executed by a processor, is configured to implement the CSI reporting method according to any one of claims 1 to 14.
